# EUROPÄISCHE PATENTSCHRIFT

(11) **EP 4 389 063 B1**
(45) Veröffentlichungstag und Bekanntmachung des Hinweises auf die Patenterteilung: **03.06.2026**
(21) Anmeldenummer: 23216278.4
(22) Anmeldetag: 13.12.2023
(51) Int. Cl.: A61C 13/00, A61C 13/01, A61C 13/087, A61C 13/10, A61C 13/36, A61C 13/12

(54) **VERFAHREN ZUR HERSTELLUNG EINER DENTALPROTHESE DURCH AUFFÜLLEN EINES ZWISCHENRAUMS**
METHOD FOR PRODUCING A DENTAL PROSTHESIS BY FILLING AN INTERMEDIATE SPACE
PROCÉDÉ DE FABRICATION D'UNE PROTHÈSE DENTAIRE PAR REMPLISSAGE D'UN ESPACE INTERMÉDIAIRE

(30) Priorität: 22.12.2022 DE 102022134561
(43) Veröffentlichungstag der Anmeldung: 26.06.2024
(73) Patentinhaber: Kulzer GmbH, 63450 Hanau (DE)
(72) Erfinder: STANGE, Frank-Uwe, 88085 Langenargen (DE); MÖLLER, Matthias, 88097 Eriskirch (DE); RENZ, Karl-Heinz, 63820 Elsenfeld (DE)
(74) Vertreter: Kilian Kilian & Partner mbB

(56) Entgegenhaltungen:
- EP-A2- 3 593 756
- DE-A1- 102017 113 814

## Beschreibung

Die Erfindung betrifft ein Verfahren zur Herstellung einer Dentalprothese, wie einer dentalen Teil- oder Vollprothese, sowie eine Dentalprothese hergestellt mit einem solchen Verfahren und eine Vorrichtung zum Umsetzen des Verfahrens.

Neben handwerklichen Techniken gewinnen digitale Fertigungsmethoden auch im Dentalbereich immer mehr an Bedeutung. Zahnersatz und andere dentale Formkörper, wie zum Beispiel Dentalprothesen, Kronen, Brücken und Aufbissschienen, werden seit einigen Jahren mittels CAD/CAM-Technologien subtraktiv in Fräsverfahren hergestellt (CAM - Computer-Aided Manufacturing, Deutsch: rechnerunterstützte Fertigung, CAD - Computer-Aided Design, Deutsch: rechnerunterstützte Konstruktion). Auch bei der Herstellung und dem Entwurf von dentalen Teil- und Vollprothesen mit Prothesenbasis zur Auflage auf der Gingiva und darin befestigten oder angeordneten Prothesenzähnen, werden zunehmend CAD/CAM-Verfahren angewendet.

Im Rahmen des digitalen Designs von prothetischen Arbeiten, insbesondere von Teil- oder Totalprothesen wird die Konstruktion in einen "weißen" oder zahnfarbenen Zahnanteil (die Prothesenzähne) und einen zahnfleischfarbenen ("rosa") Prothesenbasisanteil (die Prothesenbasis) aufgegliedert. Dentalprothesen bestehen folglich aus einer zahnfleischfarbenen beziehungsweise rosafarbenen Basis und zahnfarbenen Anteilen (Prothesenzähne oder Zahnsegmente).

Es gibt Verfahren, wie beispielsweise die aus der DE 10 2009 056 752 A1 oder der WO 2013/124 452 A1 bekannten Verfahren, bei denen eine dentale Teil- beziehungsweise Totalprothese digital aufgestellt und über CAD/CAM-Verfahren produziert wird. Aus dem Patent DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt. Die EP 2 742 906 A1 offenbart ein Verfahren, bei dem ein Zahnbogen mit einer Abformmasse verbunden wird, wobei die Abformmasse in einem individualisierten Abformlöffel enthalten ist und einen Abdruck der Mundraumsituation des Patienten enthält. Die Oberfläche der Form mit dem Zahnbogen wird digitalisiert und anschließend rechnerisch ein virtuelles Modell des Zahnbogens möglichst passend in dem virtuellen Modell der Prothesenbasis positioniert und orientiert.

Im Rahmen der digitalen Totalprothetik oder Teilprothetik werden Prothesenzähne oder Zahnformkörper benötigt, die sich eindeutig und reproduzierbar mit der Prothesenbasis verkleben lassen.

Die WO 2016/091 762 A1 offenbart ein Verfahren zur Herstellung einer Dentalprothese, bei dem eine Schablone erzeugt wird, mit der mehrere Prothesenzähne in der gewünschten Lage und Orientierung zueinander an einer Prothesenbasis befestigt werden können. Die Prothesenzähne werden dabei durch basales Schleifen in einem zervikalen Bereich eingekürzt, um die gewünschte Bisshöhe herzustellen. Die WO 2016/110 392 A1 offenbart ein Verfahren zur Herstellung einer Dentalprothese, bei dem ein plastisch verformbares Verbindungsmittel in Zahnfächer einer Prothesenbasis eingebracht wird, um eine manuelle Korrektur der Ausrichtung der Prothesenzähne in der Prothesenbasis zu ermöglichen. Aus der DE 10 2008 019 694 B3 ist ein Verfahren und eine Einrichtung zur Herstellung dentaler Formkörper aus Keramik mit einem Laser bekannt. Aus der EP 2 571 451 B1 und der EP 2 666 438 A2 sind Verfahren zur Herstellung von Dentalprothesen bekannt, bei denen vorkonfektionierte Prothesenzähne in einer Halterung in Wachs eingebettet werden und anschließend zervikal mittels CAM-Verfahren abgefräst werden. Es ist notwendig, die Prothesenzähne basal (beziehungsweise zervikal) zu kürzen, um die Zahnhöhe an den Kiefer des Patienten anzupassen, also um die Bisshöhe der Dentalprothese passend zu den Bedürfnissen des Patienten einzustellen. Die WO 2014/159 436 A1 offenbart eine geschichtete Dentalprothese mit einer Verstärkung in der Prothesenbasis, die in einen basalen Hohlraum eingegossen wird. Neben Dentalprothesen können auch andere dentale Formkörper wie Aufbissschienen digital anhand von Patientendaten mit subtraktiven CAM-Verfahren hergestellt werden. Nachteilig ist bei solchen Aufbissschienen, dass diese eine ausreichende Abrasionsfestigkeit aufweisen müssen, was aber zahnseitig den Tragekomfort verringert. Zudem ist die Möglichkeit zur ästhetischen Veränderung von Aufbissschienen beschränkt.

Sowohl bei der additiven Fertigung wie auch bei der subtraktiven Fertigung stellen die Verbindung von Basis und zahnfarbenen Anteilen (Prothesenzähnen) eine erhebliche Herausforderung dar. Die Verbindung erfolgt in der Regel durch Verkleben, wobei die Qualität der Übergänge durch die Verwendung von zu wenig oder von zu viel Kleber wie auch die korrekte Positionierung der Prothesenzähne bei der Verklebung fehlerträchtig sind. Ebenfalls verfügbare einteilige zweifarbige (zahnfleischfarbene und zahnfarbene) Fräsrohlinge verfügen zwar über eine sehr gute Verbindung der Schichten, jedoch ist die Ästhetik aufgrund der vorgegebenen Phasengrenzen stets ein Kompromiss und damit unbefriedigend.

Aus der DE 10 2017 117 4912 A1 ist ein Verfahren zum Erzeugen einer Dentalprothese bekannt, bei dem eine Prothesenbasis in zwei Schritten gefräst wird und die Prothesenzähne anschließend an der Prothesenbasis befestigt werden. Die US 2022/0110730 A1 offenbart eine zweiteilige Dentalprothese, bei der ein Zahnbogenanteil und ein Zahnfleischanteil über passende Strukturen aneinander befestigt werden. Aus der US 2022/0096217 A1 sind eine Array-Vorrichtung und ein Array-Verfahren bekannt, bei denen an einer Zahnprothesenplatte Prothesenzähne zu befestigen sind, wobei mit einem Körper mit zu den Prothesenzähnen passenden Aussparungen und mit Positionierungsabschnitte eine Anordnung der Prothesenzähne erleichtert wird.

Aus der DE 10 2017 113 814 A1 ist ein Verfahren zur Herstellung einer Dentalprothese bekannt, bei dem mehrere basal bearbeitete Prothesenzähne in eine Prothesenbasis eingeklebt werden.

EP 3 593 756 A2 offenbart ein Verfahren, bei dem mit einem Aufmaß versehene Prothesenzähne, in eine, ebenfalls mit einem Aufmaß versehene, subtraktiv bearbeitete Prothesenbasis eingesetzt und mittels Verbundmasse/Klebstoff eingeklebt werden. Nachfolgend werden die Prothesenbasis und die eingeklebten Zähne subtraktiv bearbeitet um das jeweilige Aufmaß und einen etwaigen Überschuss an Verbundmasse/Klebstoff zu entfernen.

Die US 2013/0101962 A1 offenbart ein Verfahren zur Herstellung einer Dentalprothese, wobei bei dem Verfahren mehrere Vertiefungen entlang eines Zahnbogens in einen Block gefräst werden, wobei in die Vertiefungen mehrere Kunststoffe eingefüllt wird und zwischendurch aus den in den Vertiefungen ausgehärteten Kunststoffen die Prothesenzähne gefertigt werden. Der Block wird anschließend weitgehend abgetragen und aus dem Block die Prothesenbasis gefertigt. Es handelt sich bei dem Verfahren um ein mehrstufiges Fräsverfahren. Nachteilig sind bei dem Verfahren nach der US 2013/0101962 A1 der große Materialverlust und die beim Abtragen des Materials des Blocks benötigte Zeit sowie der Verschleiß der hierfür benötigten Werkzeuge. Aus der EP 2 915 503 B1 ist ein umgekehrtes Verfahren zur Herstellung einer Dentalprothese bekannt, bei dem ein Fräsrohling aus einem Zahnschmelzmaterial subtraktiv bearbeitet wird, um einen Hohlraum zu erzeugen, der als Negativform für eine Prothesenbasis einer Dentalprothese verwendet wird. Anschließend werden die okklusale Seite und die basale Seite der Dentalprothese subtraktiv aus dem so entstandenen Verbund hergestellt. Auch dies ist ein mehrstufiges Fräsverfahren. Nachteilig ist an dem Verfahren nach der EP 2 915 503 B1, dass sehr große Mengen des relativ harten Zahnschmelzmaterials und der anderen Materialien entfernt werden müssen, um die Dentalprothesen zu fertigen. Damit geht nicht nur der Verlust einer großen Menge des Zahnschmelzmaterials und der anderen Materialien einher, sondern die Fräswerkzeuge werden intensiv beansprucht und der Zeitaufwand zum Umsetzen des Verfahrens ist relativ groß.

Auch müssen Anteile des eingefüllten zahnfleischfarbenen Materials wieder entfernt werden, nachdem es im rückseitigen Hohlraum des Zahnschmelzmaterials ausgehärtet wurde. Hierdurch wird der Materialverbrauch und damit die für die Umsetzung notwendige Zeit und die Beanspruchung der Werkzeuge noch weiter erhöht.

Wenn ein mehrstufiger Prozess gewählt wird, bei dem die Prothesenzähne und/oder die Prothesenbasis aus mehreren unterschiedlichen Materialien gefertigt werden soll, potenziert sich der Materialverbrauch und damit der Zeitaufwand und die Werkzeugbeanspruchung hierdurch erneut.

Des Weiteren können bei nicht vollständiger Entfernung des Zahnschmelzmaterials von den Außenseiten (der okklusalen und oralen Seite) der Prothesenbasis ästhetisch störende weiße beziehungsweise zahnfarbene Reste verbleiben, die anschließend manuell vom Zahntechniker entfernt werden müssen. Dadurch kann es wiederum zu einer ungewollten Verdünnung der Materialstärke der Prothesenbasis kommen.

Ferner ist an solchen Verfahren nachteilig, dass entweder die Prothesenzähne oder die Prothesenbasis aus gießfähigen Kunststoffen wie PMMA basierten Werkstoffen gefertigt werden müssen. Dies schränkt die Materialauswahl ein.

Für die Herstellung digital designter Totalprothesen bestehen im Stand der Technik folgende Möglichkeiten:
1. Fräsen oder Drucken der zahnfleischfarbenen Basis und Verkleben mit künstlichen Zähnen, alternativ mit gefrästen oder gedruckten zahnfarbenen Segmenten. Nachteile hierbei können sein: Ungenauigkeit der Fertigung, Zeitaufwand, ästhetische Herausforderungen aufgrund Kleberüberschüssen beziehungsweise Unterfüllung von Randspalten, Limitierungen bezüglich der Fräsbarkeit von Kavitäten aufgrund von Hinterschneidungen.
2. Fräsen von vorgefertigten Frässcheiben mit integrierter zweiphasiger Struktur. Dabei wird versucht, durch geschickte Anordnung der Übergänge eine natürliche Ästhetik zu erreichen. Nachteilig ist hierbei die Lage der Übergänge von zahnfleischfarben zu zahnfarben, die immer einen Kompromiss darstellt und ästhetisch unbefriedigend ist.
3. Fräsen von vorgeformten Formkörpern, in die vorkonfektionierte Zähne bereits integriert sind. Hauptsächlich wird bei diesen Verfahren nur die basale Seite der Prothese noch individuell angefertigt. Nachteilig ist hieran, dass die Kompatibilität mit individuellen Patientenfällen äußerst limitiert ist und viele Varianten von vorgeformten Formkörpers vorzuhalten sind.
4. Schichtweiser Aufbau einer Prothese bestehend aus zahnfarbenen Einzelschichten und einer Prothesenbasis durch mehrmaliges Fräsen und Wiederbefüllen der ausgefrästen Kavitäten. Nachteilig sind hieran der große Materialverlust und der Zeitaufwand.

Die Aufgabe der Erfindung besteht darin, die Nachteile des Stands der Technik zu überwinden. Insbesondere soll eine Möglichkeit gefunden werden, ein Verfahren zur Herstellung einer Dentalprothese, eine Dentalprothese und eine Vorrichtung zur Herstellung einer Dentalprothese aus zumindest zwei unterschiedlichen und miteinander fest verbundenen Materialien bereitzustellen, mit denen eine schnelle und ressourcenschonende Herstellung von dentalen Formkörpern mittels subtraktiver CAM-Verfahren und gegebenenfalls zusätzlich additiver CAM-Verfahren möglich ist. Bei dem Verfahren soll möglichst wenig Material sowohl von dem Material für die Prothesenzähne als auch von dem Material für die Prothesenbasis entfernt werden müssen. Insbesondere sollen die zumindest zwei Materialien im Rahmen des Verfahrens aneinandergefügt werden können. Die Materialauswahl soll möglichst frei sein. Insbesondere soll es vermieden, dass die Prothesenzähne und die Prothesenbasis vollständig aus einem ausgehärteten und zuvor flüssigen Kunststoff bestehen. Das Verfahren soll für den Zahntechniker möglichst einfach und unaufwendig umsetzbar sein. Insbesondere sollen vollautomatisierte oder möglichst weitgehend automatisierte Techniken wie CAD/CAM-Technologien genutzt werden und nutzbar sein.

Die Aufgaben der Erfindung werden gelöst durch ein Verfahren nach Anspruch 1, eine Dentalprothese nach Anspruch 14 und eine Vorrichtung zum Umsetzen des Verfahrens nach Anspruch 15. Bevorzugt Varianten werden mit den Unteransprüchen 2 bis 13 und 16 beansprucht.

Die Aufgaben der Erfindung werden also gelöst durch ein Verfahren zur Herstellung einer Dentalprothese, wobei die Dentalprothese mehrere Prothesenzähne und eine Prothesenbasis aufweist, wobei die Prothesenbasis einen zahnfleischfarbenen Kunststoff aufweist und wobei die Prothesenzähne und die Prothesenbasis bei dem Verfahren fest miteinander verbunden werden, wobei das Verfahren durch die folgenden Schritte gekennzeichnet ist:
A) Bereitstellen eines Fräskörpers zur Herstellung der Prothesenzähne aus einem für Prothesenzähne geeigneten Material und Bereitstellen einer Prothesenbasisvorform, wobei die Prothesenbasisvorform eine Halterungsstruktur an einer oralen Seite der Prothesenbasisvorform aufweist;
B) Herstellen einer Verbindungsoberfläche zwischen den Prothesenzähnen und der Prothesenbasis in einer Oberfläche des Fräskörpers mit Hilfe eines subtraktiven CAM-Verfahrens nach Maßgabe eines virtuellen dreidimensionalen Modells der Verbindungsoberfläche der Prothesenzähne zu der Prothesenbasis in der Dentalprothese, wobei die Oberfläche des Fräskörpers eine ebene Oberfläche ist;
C) Herstellen einer Gegenhalterungsstruktur in der Oberfläche des Fräskörpers, wobei die Gegenhalterungsstruktur ein zur Halterungsstruktur der Prothesenbasisvorform passendes Gegenstück bildet, oder der Fräskörper weist die zur Halterungsstruktur der Prothesenbasisvorform passende Gegenhalterungsstruktur auf;
D) nach den Schritten A), B) und C) Befestigen der Prothesenbasisvorform mit der Halterungsstruktur an der Gegenhalterungsstruktur des Fräskörpers, wobei die Prothesenbasisvorform außer an der Gegenhalterungsstruktur von der bearbeiteten Oberfläche des Fräskörpers beabstandet befestigt wird, so dass ein nach außen offener Zwischenraum zwischen der Prothesenbasisvorform und dem Fräskörper entsteht;
E1) nach Schritt D) Einfüllen zumindest eines fluiden polymerisierbaren Kunststoffs oder Klebstoffs in den Zwischenraum zwischen dem Fräskörper und der Prothesenbasisvorform und in das in Schritt B) abgetragene Volumen in der Oberfläche des Fräskörpers; und/oder E2) vor Schritt D) Auftragen zumindest eines fluiden polymerisierbaren Kunststoffs oder Klebstoffs auf eine orale Oberfläche der Prothesenbasisvorform und/oder auf die in Schritt B) hergestellte Verbindungsoberfläche des Fräskörpers;
F) nach Schritt E1) oder nach Schritt E2) oder nach Schritt D) Aushärten oder Teilhärten des zumindest einen fluiden polymerisierbaren Kunststoffs oder Klebstoffs, wobei beim Aushärten ein ausgehärtetes Kunststoffmaterial im Zwischenraum entsteht oder beim Teilhärten ein teilweise polymerisiertes Kunststoffmaterial im Zwischenraum entsteht, wobei das ausgehärtete Kunststoffmaterial oder das teilweise polymerisierte Kunststoffmaterial die Prothesenbasisvorform mit dem Material des Fräskörpers fest und flächenbündig verbindet; und
G) nach Schritt F) subtraktives Bearbeiten des ausgehärteten oder teilweise polymerisierten Kunststoffmaterials, der Prothesenbasisvorform und des Fräskörpers mit einem CAM-Verfahren nach Maßgabe eines virtuellen Modells einer äußeren Oberfläche der Dentalprothese, so dass die Dentalprothese aus der Prothesenbasisvorform, dem ausgehärteten oder teilweise polymerisierten Kunststoffmaterial und dem Material des Fräskörpers subtraktiv herausgearbeitet wird.

Die Schritte A), B), C), D), F) und G) erfolgen bei einem erfindungsgemäßen Verfahren zwingend, während entweder der Schritt E1) oder der Schritt E2) oder die Schritte E1) und E2) bei dem erfindungsgemäßen Verfahren erfolgen müssen. Bevorzugt kann vorgesehen sein, dass entweder der Schritt E1) oder der Schritt E2) durchgeführt wird und nicht beide.

Das für die Prothesenzähne geeignete Material ist vorzugsweise ein endgehärteter zahnfarbener Kunststoff, kann aber auch eine geeignete zahnfarbene Keramik sein. Derartige Materialien zur Herstellung von Prothesenzähnen sind dem Fachmann bekannt.

Das Material für die Prothesenzähne (also das Material des Fräskörpers oder zumindest des Teils des Fräskörpers, aus dem die Prothesenzähne gefertigt werden), der zumindest eine fluide polymerisierbare Kunststoff oder Klebstoff, der zahnfleischfarbene Kunststoff und alle andere Materialien, aus denen die Prothesenbasisvorform gefertigt ist, müssen biokompatibel sein und für die Verwendung im Mundraum des Patienten geeignet und zugelassen sein.

Es kann vorgesehen sein, dass das Material für die Prothesenzähne ein Kunststoff ist oder eine Kunststoffzusammensetzung ist, bevorzugt ein Polymethylmethacrylat (PMMA) oder eine PMMA-haltige Kunststoffzusammensetzung und/oder ein Heiß-Polymerisat ist.

Unter einem Fräskörper im Sinne der vorliegenden Erfindung wird ein Festkörper verstanden, der zum subtraktiven Bearbeiten mit Fräswerkzeugen geeignet ist und dessen geometrische Abmessungen zur Handhabung in CAM-Fräsmaschinen geeignet ist.

Es kann vorgesehen sein, dass die Prothesenbasisvorform keine Verbindungsflächen aufweist, die zum Anlegen an die Prothesenzähne vorgesehen sind. Hierdurch wird sichergestellt, dass die Prothesenzähne über den zumindest einen fluiden polymerisierbaren Kunststoff oder Klebstoff mit der Prothesenbasisvorform verbunden werden und hierfür ein ausreichender Zwischenraum beziehungsweise ein ausreichender Spalt bereitgestellt wird.

Es kann auch vorgesehen sein, dass der Zwischenraum ein gleichmäßiges Spaltmaß zwischen der oralen Oberfläche der Prothesenvorform und der in Schritt B) bearbeiteten Oberfläche des Fräskörpers aufweist beziehungsweise bereitstellt. Hierzu kann die Prothesenbasisvorform auf der oralen Seite entsprechend nach Maßgabe des virtuellen dreidimensionalen Modells der Form der Verbindungsoberfläche der Prothesenzähne zu der Prothesenbasis in der Dentalprothese mit einem Offset als Abstand geformt werden, bevorzugt mittels einem additiven CAM-Verfahren hergestellt werden, besonders bevorzugt mit einem 3D-Drucker gedruckt werden.

Unter der oralen Seite und der oralen Oberfläche der Prothesenvorform oder der Dentalprothese ist vorliegend die zum Mundraum weisende Oberfläche/Seite zu verstehen, also die von der Auflagefläche auf dem Zahnfleisch wegweisende Oberfläche/Seite.

Das Befestigen der Prothesenbasisvorform an dem bearbeiteten Fräskörper in Schritt D) kann ortsunabhängig und flexibel durchgeführt werden. Dadurch ist eine Zeitersparnis möglich.

Es kann vorgesehen sein, dass das Befestigen der Prothesenbasisvorform an dem bearbeiteten Fräskörper in Schritt D) in einer CAM-Vorrichtung zur Umsetzung des CAM-Verfahrens in den Schritten B) und G) durchgeführt wird, wobei bevorzugt der Fräskörper in der CAM-Vorrichtung zur Umsetzung des CAM-Verfahrens in den Schritten B) bis G) fixiert bleibt. Ein Entnehmen des bearbeiteten Fräskörpers zur Befestigung der Prothesenbasisvorform ist nicht notwendig. Die CAM-Vorrichtung kann erfindungsgemäß bevorzugt eine Fräsmaschine sein, besonders bevorzugt eine computergesteuerte Mehrachs-Fräsmaschine.

Unter einem nach außen offenen Zwischenraum ist ein Zwischenraum zu verstehen, der in Richtung der Umgebung des Systems bestehend aus dem bearbeiteten Fräskörper und der daran befestigten Prothesenbasisvorform offen ist, so dass der Zwischenraum von außen zugänglich ist. Hierdurch kann beispielsweise der zumindest eine fluide polymerisierbare Kunststoff oder Klebstoff von außen in den Zwischenraum eingefüllt werden.

Wenn der zumindest eine fluide polymerisierbare Kunststoff oder Klebstoff bereits in einem Schritt E2) vorher aufgetragen wurde, kann der Zwischenraum teilweise oder vollständig mit dem in Schritt E2) aufgetragenen zumindest einen fluiden polymerisierbaren Kunststoff oder Klebstoff gefüllt sein, nach dem in Schritt D) die Prothesenbasisvorform an dem bearbeiteten Fräskörper befestigt wurde.

Bevorzugt besteht die Prothesenbasisvorform aus dem zahnfleischfarbenen Kunststoff oder wird aus dem zahnfleischfarbenen Kunststoff hergestellt. Alternativ kann vorgesehen sein, dass in dem zahnfleischfarbenen Kunststoff eine Armierung eingebettet ist, insbesondere eine metallische Armierung.

In Schritt G) erfolgt das subtraktive Bearbeiten vorzugsweise derart, dass die Dentalprothese derart aus der Prothesenbasisvorform, dem ausgehärteten oder teilweise polymerisierten Kunststoffmaterial und dem Material des Fräskörpers subtraktiv herausgearbeitet wird, dass die äußere Oberfläche der Dentalprothese, die die Prothesenzähne bildet, von dem Material des Fräskörpers gebildet werden und die restliche äußere Oberfläche, die die Prothesenbasis bildet, von dem Material der Prothesenbasisvorform und dem ausgehärteten oder teilweise polymerisierten Kunststoffmaterial gebildet werden. Hierzu kann auch vorgesehen sein, dass dies bereits in Schritt B) bei der Bearbeitung des Fräskörpers entsprechend berücksichtigt wird.

Des Weiteren kann vorgesehen sein, dass das Einfüllen des zumindest eines fluiden polymerisierbaren Kunststoffs oder Klebstoffs in Schritt E1) durch Stopfen erfolgt und/oder mit einem Überdruck durchgeführt wird, insbesondere in einem Drucktopf oder in einem Druckraum mit einem Druck über Normaldruck, bevorzugt mit einem Druck von mindestens 150 kPa, besonders bevorzugt mit einem Druck von mindestens 200 kPa, ganz besonders bevorzugt mit einem Druck von mindestens 200 kPa und höchstens 400 kPa.

Auch kann vorgesehen sein, dass das Einfüllen zumindest eines fluiden polymerisierbaren Kunststoffs oder Klebstoffs in Schritt E1) durch Stopfen erfolgt und/oder mit einem Überdruck durchgeführt wird, insbesondere in einem Drucktopf oder in einem Druckraum, mit einem Druck von maximal 1.000 kPa, bevorzugt mit einem Druck von maximal 500 kPa, besonders bevorzugt mit einem Druck von maximal 400 kPa.

Ferner kann vorgesehen sein, dass das Aushärten oder Teilhärten des fluiden polymerisierbaren Kunststoffs in Schritt F) durch Einwirken von Wärme und/oder Druck erfolgt, wobei bevorzugt das Aushärten oder Teilhärten über einen Zeitraum zwischen 10 Minuten und 120 Minuten erfolgt, besonders bevorzugt zwischen 30 Minuten und 60 Minuten.

Es kann auch vorgesehen sein, dass das Aushärten oder Teilhärten des zumindest einen fluiden polymerisierbaren Kunststoffs oder Klebstoffs in Schritt F) durch eine Lichthärtung erfolgt, insbesondere durch eine Lichtpolymerisation erfolgt.

Es kann vorgesehen sein, dass die Halterungsstruktur und die Gegenhalterungsstruktur derart angeordnet sind, dass sie innerhalb des Volumens der herzustellenden Dentalprothese angeordnet sind. Dadurch sind die Halterungsstruktur und die Gegenhalterungsstruktur nicht an der Oberfläche der Dentalprothese sichtbar und können dort das Gefüge nicht stören.

Es kann vorgesehen sein, dass die Prothesenbasisvorform in Schritt D) mit der Halterungsstruktur an der Gegenhalterungsstruktur des Fräskörpers definiert beabstandet befestigt wird. Definiert beabstandet bedeutet in diesem Zusammenhang, dass ein definierter und dadurch vorherbestimmter Abstand zwischen der Prothesenbasisvorform und der bearbeiteten Oberfläche des Fräskörpers entsteht, beziehungsweise eingestellt wird.

Es kann vorgesehen sein, dass nach Schritt F) oder nach Schritt G) ein Schritt H) erfolgt, bei dem das teilweise polymerisierte Kunststoffmaterial endgehärtet wird, insbesondere durch Lichtpolymerisation endgehärtet wird, wobei vorzugsweise im Anschluss an Schritt G) und H) eine Politur der Oberfläche der Dentalprothese und/oder eine Oberflächenveredelung der Dentalprothese durchgeführt wird.

Hierdurch wird eine hohe Endfestigkeit des endgehärteten Kunststoffmaterials und damit der Dentalprothese insbesondere in der Verbindung zwischen den Prothesenzähnen und der Prothesenbasisvorform erzielt.

Ferner kann vorgesehen sein, dass der Fräskörper eine umlaufende Wandung aufweist, wobei die umlaufende Wandung des Fräskörpers in den Schritten B) bis F) erhalten bleibt, wobei bevorzugt in Schritt E1) die umlaufende Wandung in Kontakt mit dem zumindest einen fluiden polymerisierbaren Kunststoff oder Klebstoff kommt, besonders bevorzugt der zumindest eine fluide polymerisierbare Kunststoff oder Klebstoff derart in den Zwischenraum gefüllt wird, dass der Pegel bis an die umlaufende Wandung steigt, aber unterhalb der umlaufenden Wandung bleibt.

Hierdurch ist das Verfahren für den Anwender leichter durchführbar. Die Gefahr, die Umgebung mit dem fluiden polymerisierbaren Kunststoff oder Klebstoff zu verschmutzen, ist hierdurch reduziert.

Bevorzugt wird das Verfahren jedoch so durchgeführt, dass der in Schritt B) erzeugte Hohlraum im Fräskörper zur Aufnahme des fluiden polymerisierbaren Kunststoffs oder Klebstoffs und zur vollständigen Verbindung der Prothesenbasisvorform mit dem Fräskörper damit ausreicht, ohne dass der fluide polymerisierbare Kunststoff oder Klebstoff über die unbearbeitete Oberfläche des Fräskörpers aus dem Zwischenraum austritt.

Des Weiteren kann vorgesehen sein, dass die Prothesenbasisvorform in Schritt D) an dem Fräskörper fixiert wird, bevorzugt mit der Halterungsstruktur an der Gegenhalterungsstruktur an den Fräskörper geklebt wird.

Hiermit kann sichergestellt werden, dass die Prothesenbasisvorform nicht auf dem fluiden polymerisierbaren Kunststoff oder Klebstoff aufschwimmt oder beim Einfüllen des fluiden polymerisierbaren Kunststoffs oder Klebstoffs in den Zwischenraum von dem Fräskörper weggedrückt wird. Dadurch wird eine definierte Dicke des ausgehärteten oder teilweise polymerisierten Kunststoffs zwischen der Prothesenbasisvorform und den aus dem Fräskörper gefertigten Prothesenzähnen erreicht.

Es kann auch vorgesehen sein, dass die Prothesenbasisvorform zumindest teilweise oder vollständig aus einem zahnfleischfarbenen Kunststoff besteht.

Damit wird erreicht, dass die Prothesenbasis später ohne weiteres und ohne aufwendige Nachbearbeitung aus der Prothesenbasisvorform und dem ausgehärteten oder teilweise polymerisierten Kunststoff gefertigt werden kann. Außerdem kann die Prothesenbasisvorform dadurch gut mit einem additiven CAM-Verfahren aus dem zahnfleischfarbenen Kunststoff gefertigt werden.

Bevorzugt kann auch vorgesehen sein, dass vor Schritt A) die Prothesenbasisvorform auf Basis des virtuellen dreidimensionalen Modells einer Oberfläche einer basalen Seite der Prothesenbasis der Dentalprothese mit einem CAM-Verfahren hergestellt wird, insbesondere mit einem additiven CAM-Verfahren hergestellt wird, wobei bevorzugt die basale Seite der Prothesenbasisvorform mit einem Offset in Form einer basalen Materialverdickung erzeugt wird.

Hierdurch ist die Prothesenbasisvorform noch besser an die Form der Prothesenbasis der herzustellenden Dentalprothese angepasst und auch schon weitgehend an die Patientenbedürfnisse individualisiert. Damit wird Zeit beim abschließenden subtraktiven CAM-Verfahren in Schritt G) eingespart und auch der Verbrauch von Material reduziert. Durch den Offset in Form der basalen Materialverdickung wird sichergestellt, dass die höhere Präzision der Endfertigung des abschließenden subtraktiven CAM-Verfahrens im Vergleich zum weniger präzisen additiven CAM-Verfahren genutzt werden kann, um eine qualitativ hochwertige Dentalprothese herzustellen.

Dabei kann auch vorgesehen sein, dass bei der Herstellung der Prothesenbasisvorform eine Materialverstärkung vorgesehen wird, wobei die Materialverstärkung eine Stärke von mindestens 0,1 mm im Vergleich zur Oberfläche des virtuellen dreidimensionalen Modells der Dentalprothese im Bereich der basalen Seite der Prothesenbasis aufweist, besonders bevorzugt eine Materialverstärkung von mindestens 0,1 mm und maximal 2 mm aufweist, ganz besonders bevorzugt eine Materialverstärkung von mindestens 0,3 mm und maximal 1 mm aufweist.

Hiermit wird sichergestellt, dass in Schritt G) noch ausreichend Material im Überschuss insbesondere an der basalen Seite der Prothesenbasisvorform vorhanden ist, damit kein Material fehlt oder nach Schritt G) ergänzt werden muss. Dies ermöglicht eine exakte Fertigung der Dentalprothese mit Hilfe des exakter arbeitenden subtraktiven CAM-Verfahrens.

Es kann dabei vorgesehen sein, dass bei der Herstellung der Prothesenbasisvorform an der Halterungsstruktur keine Materialverstärkung vorgesehen wird.

Da der Zwischenraum mit dem fluiden polymerisierbaren Kunststoff oder Klebstoff aufgefüllt wird, wird an dieser Stelle kein Material der Prothesenbasisvorform im Überschuss benötigt.

Ferner kann vorgesehen sein, dass die Prothesenbasisvorform zumindest auf einer basalen Seite zur Auflage auf Zahnfleisch vorgeformt ist, wobei die basale Seite der oralen Seite gegenüberliegt, wobei bevorzugt die Prothesenbasisvorform auf der basalen Seite durch eine U-förmige Vertiefung zur Aufnahme eines zahnlosen Kieferbogens vorgeformt ist oder wird und/oder entsprechend der Mundraumsituation eines Patienten anatomisch passend vorgeformt ist oder wird.

Hierdurch wird der Verbrauch von Material der Prothesenbasisvorform in Schritt G) reduziert und auch die für die Bearbeitung notwendige Zeit in Schritt G) und damit der Verschleiß von Werkzeugen der subtraktiven CAM-Vorrichtung (wie zum Beispiel der Fräsköpfe) reduziert.

Des Weiteren kann vorgesehen sein, dass die Halterungsstruktur der Prothesenbasisvorform und die Gegenhalterungsstruktur paarweise durch vorstehende Stifte und zu den vorstehenden Stiften passende Ausnehmungen realisiert werden, wobei bevorzugt die vorstehenden Stifte in Schritt D) flächenbündig in die passenden Ausnehmungen eingesteckt werden.

Auf diese Weise ist eine einfache und offensichtliche und auch stabile Verbindung der Prothesenbasisvorform mit dem bearbeiteten Fräskörper möglich.

Mit einer Weiterbildung des erfindungsgemäßen Verfahrens wird auch vorgeschlagen, dass in Schritt D) die Prothesenbasisvorform gegen den Fräskörper bis zu einem Anschlag gedrückt wird, wobei der Anschlag den Abstand im Zwischenraum zwischen der Prothesenbasisvorform außer an der Gegenhalterungsstruktur zu der bearbeiteten Oberfläche des Fräskörpers bestimmt, wobei bevorzugt die Halterungsstruktur der Prothesenbasisvorform und die Gegenhalterungsstruktur des Fräskörpers den Anschlag bilden.

Durch den Anschlag wird sichergestellt, dass der gewünschte Abstand beziehungsweise das gewünschte Spaltmaß zwischen der Prothesenbasisvorform und der bearbeiteten Oberfläche des Fräskörpers beim Befestigen in Schritt D) automatisch entsteht.

Gemäß einer Weiterbildung kann vorgesehen sein, dass die Halterungsstruktur der Prothesenbasisvorform und die Gegenhaltungsstruktur an dem Fräskörper innerhalb der herzustellenden Dentalprothese angeordnet sind, bevorzugt innerhalb einer Verbindung zwischen den Prothesenzähnen und der Prothesenbasis angeordnet sind.

Hierdurch kann sichergestellt werden, dass die Verbindung zwischen der Prothesenbasisvorform und dem Fräskörper nicht in einer Oberfläche der späteren Dentalprothese liegen und dort einen Defekt in der Oberfläche verursachen können.

Auch kann vorgesehen sein, dass in Schritt D) eine definierte Beabstandung der Prothesenbasisvorform von der bearbeiteten Oberfläche des Fräskörpers erzeugt wird.

Definiert beabstandet bedeutet in diesem Zusammenhang, dass ein definierter und dadurch vorherbestimmter Abstand zwischen der Prothesenbasisvorform und der bearbeiteten Oberfläche des Fräskörpers entsteht, beziehungsweise eingestellt wird. Hierdurch wird sichergestellt, dass sowohl die Ausrichtung der Prothesenbasisvorform zu den Prothesenzähnen als auch die Größe und Form des Zwischenraums genau eingestellt werden und dadurch die subtraktive CAM-Bearbeitung in Schritt G) in einem geringeren Umfang erfolgen kann, wodurch wiederum Arbeitszeit und Ressourcen in Form von Kunststoff und Fräskopfabnutzung eingespart werden kann.

Ferner kann vorgesehen sein, dass in Schritt D) eine Beabstandung der Prothesenbasisvorform von der bearbeiteten Oberfläche des Fräskörpers von mindestens 0,02 mm und maximal 2 mm erzeugt wird, bevorzugt von mindestens 0,02 mm und maximal 1 mm erzeugt wird, besonders bevorzugt von mindestens 0,1 mm und maximal 1 mm erzeugt wird, ganz besonders bevorzugt von mindestens 0,3 mm und maximal 1 mm erzeugt wird.

Die Beabstandung betrifft alle Bereiche außer an der Verbindung der Halterungsstruktur zur Gegenhalterungsstruktur.

Durch diese Abstände wird sichergestellt, dass der fluide polymerisierbare Kunststoff oder Klebstoff gut in den Zwischenraum eingefüllt beziehungsweise gestopft werden kann.

Bei einem Durchführen des Schritts E2) ohne den Schritt E1) werden vorzugsweise relativ geringe Beabstandungen zwischen 0,02 mm und 0,5 mm gewählt, bevorzugt zwischen 0,02 mm und 0,3 mm, besonders bevorzugt zwischen 0,05 mm und 0,2 mm.

Bei einem Durchführen des Schritts E1) mit oder ohne den Schritt E2) werden dagegen vorzugsweise relativ große Beabstandungen zwischen 0,3 mm und 2 mm gewählt, bevorzugt zwischen 0,3 mm und 1 mm, besonders bevorzugt zwischen 0,5 mm und 1 mm.

Des Weiteren kann vorgesehen sein, dass in Schritt E1) der zumindest eine fluide polymerisierbare Kunststoff oder Klebstoff zumindest mit einem derartigen Füllstand in den Zwischenraum gefüllt wird, dass die Verbindungsoberfläche der Prothesenzähne und eine orale Oberfläche der Prothesenbasisvorform, die vollständig innerhalb dem virtuellen Modell der Prothesenbasis liegt, vollständig mit dem fluiden polymerisierbaren Kunststoff benetzt ist.

Hiermit wird sichergestellt, dass später in der Dentalprothese keine Luft- beziehungsweise Gaseinschlüsse vorhanden sind und eine stabile und formschlüssige Verbindung der Schichten beziehungsweise Teile der Dentalprothese erfolgt.

Es ist vorgesehen, dass die Oberfläche des Fräskörpers, in der in Schritt B) die Verbindungsoberfläche zwischen den Prothesenzähnen und der Prothesenbasis hergestellt wird, eine ebene Oberfläche ist.

Hierdurch wird später das Einfüllen oder Auftragen des fluiden polymerisierbaren Kunststoffs oder Klebstoffs erleichtert. Zudem kann so ein handelsübliches Blank als Fräskörper verwendet werden.

Gemäß einer bevorzugten Weiterbildung kann vorgesehen sein, dass das ausgehärtete Kunststoffmaterial oder das teilweise polymerisierte Kunststoffmaterial nach vollständiger Aushärtung von dem zahnfleischfarbenen Kunststoff der Prothesenbasisvorform abweichende Materialeigenschaften und/oder Farbe aufweist, wobei bevorzugt das ausgehärtete Kunststoffmaterial oder das teilweise polymerisierte Kunststoffmaterial nach vollständiger Aushärtung eine von dem zahnfleischfarbenen Kunststoff des Prothesenbasisvorform abweichende Härte und/oder Transparenz aufweist.

Hierdurch lässt sich der zweiteilige Aufbau der Prothesenbasis aus der Prothesenbasisvorform und dem ausgehärteten (und gegebenenfalls zuvor teilpolymerisierten) Kunststoffmaterial, das durch Aushärtung aus dem fluiden polymerisierbaren Kunststoff oder Klebstoff entsteht, dazu nutzen, eine besonders stabile und/oder ästhetisch realistisch wirkende Dentalprothese zu erzeugen.

Auch kann vorgesehen sein, dass in Schritt G) die Dentalprothese durch subtraktives Bearbeiten der Prothesenbasisvorform und des Materials des Fräskörpers aus der Prothesenbasisvorform, dem ausgehärteten oder teilweise polymerisierten Kunststoffmaterial und dem Material des Fräskörpers herausgearbeitet wird oder in Schritt G) die Dentalprothese durch subtraktives Bearbeiten der Prothesenbasisvorform, des ausgehärteten oder teilweise polymerisierten Kunststoffmaterials und des Materials des Fräskörpers aus der Prothesenbasisvorform, dem ausgehärteten oder teilweise polymerisierten Kunststoffmaterial und dem Material des Fräskörpers herausgearbeitet wird.

Durch diese Bearbeitung kann eine besonders präzise Dentalprothese auf Basis des virtuellen dreidimensionalen Modells der Dentalprothese gefertigt werden. Im ersten Fall muss das ausgehärtete oder teilweise polymerisierte Kunststoffmaterial nicht bearbeitet werden. Das gelingt nur dann, wenn die Form im Fräskörper durch geeignete Vorformung mit dem subtraktiven CAM-Verfahren eine exakte Negativform der Prothesenbasis in diesem Bereich bildet.

Ferner kann vorgesehen sein, dass in Schritt D) die Prothesenbasisvorform von der Verbindungsoberfläche des Fräskörpers beabstandet befestigt wird, bevorzugt mit einem Abstand von zumindest 0,02 mm von der Verbindungsoberfläche des Fräskörpers beabstandet befestigt wird, besonders bevorzugt mit einem Abstand von zumindest 0,02 mm und maximal 2 mm von der Verbindungsoberfläche des Fräskörpers beabstandet befestigt wird, ganz besonders bevorzugt mit einem Abstand von zumindest 0,05 mm und maximal 1 mm von der Verbindungsoberfläche des Fräskörpers beabstandet befestigt wird.

Die Beabstandung betrifft alle Bereiche außer an der Verbindung der Halterungsstruktur zur Gegenhalterungsstruktur.

Durch diese Abstände wird sichergestellt, dass der fluide polymerisierbare Kunststoff oder Klebstoff gut in den Zwischenraum zwischen die Verbindungsoberfläche des Fräskörpers und die Prothesenbasisvorform eingefüllt beziehungsweise gestopft werden kann oder ein für das Auftragen des fluiden polymerisierbaren Kunststoffs oder Klebstoffs ausreichendes Spaltmaß vorhanden ist.

Des Weiteren kann vorgesehen sein, dass in Schritt E1) das Einfüllen des zumindest einen fluiden polymerisierbaren Kunststoffs oder Klebstoffs in den Zwischenraum zwischen dem Fräskörper und der Prothesenbasisvorform und in das in Schritt B) abgetragenen Volumen in der Oberfläche des Fräskörpers derart erfolgt, dass der zumindest eine fluide polymerisierbare Kunststoff oder Klebstoff den bearbeiteten Fräskörper mit der Prothesenbasisvorform verbindet, wobei bevorzugt der zumindest eine fluiden polymerisierbaren Kunststoff oder Klebstoff die in Schritt B) bearbeitete Oberfläche des Fräskörpers und eine Befestigungsfläche auf der oralen Seite der Prothesenbasisvorform vollständig benetzt und/oder der Zwischenraum vollständig, insbesondere ohne Gaseinschlüsse, mit dem zumindest einen fluiden polymerisierbaren Kunststoff oder Klebstoff ausgefüllt wird, oder in Schritt E2) das Auftragen des zumindest einen fluiden polymerisierbaren Kunststoffs oder Klebstoffs auf die orale Oberfläche der Prothesenbasisvorform und/oder auf die in Schritt B) hergestellte Verbindungsoberfläche des Fräskörpers und in Schritt D) das Befestigen der Prothesenbasisvorform an dem bearbeiteten Fräskörper derart erfolgt, dass der zumindest eine fluide polymerisierbare Kunststoff oder Klebstoff den bearbeiteten Fräskörper mit der Prothesenbasisvorform verbindet, wobei bevorzugt der zumindest eine fluiden polymerisierbaren Kunststoff oder Klebstoff die in Schritt B) bearbeitete Oberfläche des Fräskörpers und eine Befestigungsfläche auf der oralen Seite der Prothesenbasisvorform vollständig benetzt und/oder der Zwischenraum vollständig, insbesondere ohne Gaseinschlüsse, mit dem zumindest einen fluiden polymerisierbaren Kunststoff oder Klebstoff ausgefüllt wird.

Hiermit wird sichergestellt, dass später in der Dentalprothese keine Luft- beziehungsweise Gaseinschlüsse vorhanden sind und eine stabile und formschlüssige Verbindung der Schichten beziehungsweise Teile der Dentalprothese erfolgt.

Gemäß einer Weiterbildung kann vorgesehen sein, dass in Schritt B) angrenzend an die Verbindungsoberfläche zwischen den Prothesenzähnen und der Prothesenbasis eine Vertiefung in der Oberfläche des Fräskörpers mit Hilfe des subtraktiven CAM-Verfahrens erzeugt wird, vorzugsweise nach Maßgabe des virtuellen dreidimensionalen Modells der Oberfläche der Dentalprothese, wobei bevorzugt die Vertiefung als eine vollständig um die Verbindungsoberfläche umlaufende Vertiefung erzeugt wird, besonders bevorzugt eine zumindest 0,5 mm breite und maximal 10 mm breite vollständig um die Verbindungsoberfläche umlaufende Vertiefung erzeugt wird.

Diese Vertiefung kann in Schritt E1) dazu genutzt werden, mit dem zumindest einen fluiden polymerisierbaren Kunststoff oder Klebstoff gefüllt zu werden, oder in Schritt E2) dazu genutzt werden, den zumindest einen fluiden polymerisierbaren Kunststoff oder Klebstoff beim Auftragen aufzunehmen. Hierdurch kann eine großflächige Verbindung zwischen dem Fräskörper und dem zumindest einen fluiden polymerisierbaren Kunststoff oder Klebstoff erreicht werden. Zudem wird hierdurch das Einfüllen oder Auftragen erleichtert und die Vertiefung kann den zumindest einen fluiden polymerisierbaren Kunststoff oder Klebstoff aufnehmen.

Bevorzugt kann die Vertiefung eine Fließrinne sein. Besonders bevorzugt kann die Fließring ringförmig sein.

Ferner kann vorgesehen sein, dass kann vorgesehen sein, dass der zumindest eine fluide polymerisierbare Kunststoff oder Klebstoff beim Einfüllen in Schritt E1) oder beim Auftragen in Schritt E2) die in Schritt B) bearbeiteten Oberflächen des Fräskörpers vollständig benetzt und/oder die orale Oberfläche der Prothesenbasisvorform zumindest bereichsweise benetzt, wobei bevorzugt der Fräskörper an der für die Bearbeitung mit dem subtraktiven CAM-Verfahren vorgesehenen Oberfläche und/oder die Prothesenbasisvorform an der nicht mit dem fluiden polymerisierbaren Kunststoff oder Klebstoff zu benetzenden Oberfläche eine Beschichtung aufweist, die eine Benetzung mit dem zumindest beinen fluiden polymerisierbaren Kunststoff oder Klebstoff verhindert.

Damit wird sichergestellt, dass alle Bereiche, die später innerhalb der Dentalprothesen liegen, vollständig mit dem Material des Fräskörpers, dem ausgehärteten oder teilweise polymerisierten Kunststoffmaterial und dem Material der Prothesenbasisvorform ausgefüllt sind.

Auch kann vorgesehen sein, dass die orale Seite der Prothesenbasisvorform nach Maßgabe des virtuellen dreidimensionalen Modells der Form der Verbindungsoberfläche der Prothesenzähne zu der Prothesenbasis in der Dentalprothese hergestellt wird, insbesondere mit einem CAM-Verfahren oder einem additiven CAM-Verfahren, wobei bevorzugt bei der Berechnung der Oberfläche der oralen Seite der Prothesenbasisvorform Volumen von der virtuellen dreidimensionalen äußeren Form der Prothesenbasis entfernt wird, besonders bevorzugt mit einer Stärke zwischen 0,3 mm und 2 mm entfernt wird, ganz besonders bevorzugt mit einer Stärke zwischen 0,5 mm und 1 mm entfernt wird.

Hiermit kann ein definiertes Spaltmaß beziehungsweise ein definierter Abstand zwischen der Prothesenbasis und den Prothesenzähnen erreicht werden. Dies führt zu einer gleichmäßigen und stabilen Verbindung der Prothesenbasisvorform mit den Prothesenzähnen.

Des Weiteren kann vorgesehen sein, dass in Schritt G) das subtraktive Bearbeiten des ausgehärteten oder teilweise polymerisierten Kunststoffmaterials, der Prothesenbasisvorform und des Fräskörpers aus Richtung der Unterseite des Fräskörpers, die der in Schritt B) bearbeiteten Oberfläche des Fräskörpers gegenüberliegt, mit dem CAM-Verfahren nach Maßgabe der okklusalen Oberfläche und der oralen Oberfläche des virtuellen Modells der Dentalprothese erfolgt und/oder in Schritt G) ein subtraktives Bearbeiten des ausgehärteten oder teilweise polymerisierten Kunststoffmaterials, der Prothesenbasisvorform und des Fräskörpers aus Richtung der in Schritt B) bearbeiteten Oberfläche des Fräskörpers mit dem CAM-Verfahren nach Maßgabe basalen Oberfläche des virtuellen Modells der Dentalprothese erfolgt.

Hierdurch wird sichergestellt, dass die jeweiligen Oberflächen aus den gewünschten Materialien des Fräskörpers, der Prothesenbasisvorform und des ausgehärteten oder teilweise polymerisierten Kunststoffmaterials gefertigt werden.

Es kann vorgesehen sein, dass nach Schritt B) ein Schritt B2) erfolgt:
B2) Reinigen und/oder Vorbehandeln der in Schritt B) bearbeiteten Oberfläche des Fräskörpers oder ganzen Oberseite enthaltend die bearbeitete Oberfläche des Fräskörpers, wobei bevorzugt beim Vorbehandeln eine chemische Behandlung der Oberfläche des ersten Materials erfolgt, besonders bevorzugt ein chemisches Anquellen der Oberfläche des ersten Materials mit einer Monomerflüssigkeit, wobei das Material des Fräskörpers eine Kunststoffzusammensetzung enthaltend ein Polymethylmethacrylat (PMMA) oder bestehend aus einem PMMA ist.

Hierdurch wird eine besonders stabile Verbindung zwischen dem ersten Material und dem ausgehärteten oder teilweise polymerisierten Kunststoffmaterial erzeugt.

Mit einer weiteren Ausgestaltung der vorliegenden Erfindung wird vorgeschlagen, dass die Halterungsstruktur der Prothesenbasisvorform und die Gegenhalterungsstruktur drei definierte Kontaktpunkte bilden, so dass beim Befestigen der Prothesenbasisvorform mit der Halterungsstruktur an der Gegenhalterungsstruktur des Fräskörpers in Schritt D) die Prothesenbasisvorform über die drei definierten Kontaktpunkten der Halterungsstruktur an der Gegenhalterungsstruktur des Fräskörpers befestigt ist.

Durch diese Dreipunkthalterung wird eine stabile, positions- und lagefeste Verbindung zwischen der Prothesenbasisvorform und dem Fräskörper erreicht.

Ferner kann vorgesehen sein, dass beim Aushärten oder Teilhärten in Schritt F) eine Lichtpolymerisation durchgeführt wird, wobei bevorzugt nach Schritt G) eine Endhärtung durch Lichtpolymerisation erfolgt.

Hierdurch kann eine stabile Dentalprothese mit einer stabilen Verbindung zwischen den Prothesenzähnen und der Prothesenbasisvorform auf einfache Weise erzeugt werden. Bei der Lichtpolymerisation kann beim Teilhärten eine Angelieren des fluiden polymerisierbaren Kunststoffs oder Klebstoffs erfolgen.

Es kann des Weiteren vorgesehen sein, dass auf der zur Bearbeitung mit dem subtraktiven CAM-Verfahren vorgesehenen Oberfläche des Fräskörpers ein Hohlraum zur Aufnahme des fluiden polymerisierbaren Kunststoffs oder Klebstoffs angeordnet ist, wobei der Hohlraum einen Boden aufweist und der Hohlraum ausgehend vom Rand des Bodens seitlich durch eine umlaufende Wandung begrenzt ist, wobei die umlaufende Wandung ringförmig ist und wobei das für Prothesenzähne geeignete Material den Boden bildet und sich bis zu einer Unterseite des Fräskörpers erstreckt, die der Oberseite des Fräskörpers gegenüberliegend angeordnet ist.

Hierdurch wird das Einfüllen des zumindest einen fluiden polymerisierbaren Kunststoffs oder Klebstoffs erleichtert.

Eine ringförmige Wandung im Sinne der vorliegenden Erfindung weist eine Ausnehmung auf, die den geometrischen Mittelpunkt der Ausnehmung umschließt. Bevorzugt ist die Ausnehmung ohne Hinterschneidungen geformt und/oder jeder Punkt in der Ausnehmung ist in gerader Linie mit jedem anderen Punkt in der Ausnehmung verbindbar, ohne dass die gerade Linie innerhalb der umlaufenden Wandung verläuft. Bevorzugt ist die Ausnehmung ein kompakter geometrischer Körper.

Die der vorliegenden Erfindung zugrundeliegenden Aufgaben werden auch gelöst durch eine Dentalprothese hergestellt mit einem zuvor beschriebenen Verfahren.

Die Dentalprothese hat die durch das Verfahren erreichten Vorteile. Sie ist also besonders kostengünstig, zeitsparend und mit wenig Abfällen zu fertigen.

Dabei kann vorgesehen sein, dass die Prothesenbasis einen zweiteiligen Aufbau aufweist, bei dem eine subtraktiv bearbeitete Prothesenbasisvorform mit einem ausgehärteten oder teilweise polymerisierten Kunststoffmaterial aus zumindest einem fluiden polymerisierbaren Kunststoff oder Klebstoff mit den subtraktiv bearbeiteten Prothesenzähnen verbunden ist, wobei vorzugsweise die Oberfläche des ausgehärteten oder teilweise polymerisierten Kunststoffmaterials ebenfalls subtraktiv bearbeitet ist.

Die der vorliegenden Erfindung zugrundeliegenden Aufgaben werden auch gelöst durch eine Vorrichtung zur Umsetzung eines solchen Verfahrens, die Vorrichtung aufweisend ein Verbindungsoberflächen-Berechnungsmodul zur Berechnung einer Verbindungsoberfläche zwischen Prothesenzähnen und Prothesenbasis nach Maßgabe eines virtuellen dreidimensionalen Modells einer Form der Verbindungsoberfläche der Prothesenzähne zu der Prothesenbasis in der Dentalprothese; ein Prothesenbasisvorform-Berechnungsmodul zur Berechnung eines virtuellen Modells der Oberfläche einer Prothesenbasisvorform nach Maßgabe eines virtuellen dreidimensionalen Modells einer Form der Verbindungsoberfläche der Prothesenzähne zu der Prothesenbasis und einer basalen Seite der Prothesenbasis der Dentalprothese; ein Verbindungsoberflächen-Steuerungsmodul für eine CAM-Vorrichtung programmiert zur Steuerung der subtraktiven Herstellung der mit dem Verbindungsoberflächen-Berechnungsmodul berechneten Verbindungsoberfläche in einem Fräskörper; und ein Dentalprothesen-Steuerungsmodul für eine CAM-Vorrichtung programmiert zur Steuerung der subtraktiven Herstellung der Oberfläche der herzustellenden Dentalprothese nach Maßgabe des virtuellen Modells einer äußeren Oberfläche der Dentalprothese.

Bei der Vorrichtung kann es sich um eine Steuerung für eine CAD/CAM-Vorrichtung handeln, mit der Dentalprothesen herstellbar sind, wobei durch eine geeignete Programmierung der CAD/CAM-Vorrichtung die erfindungsgemäße Vorrichtung bereitgestellt wird. Eine geeignete, aus dem Stand der Technik bekannte CAD/CAM-Vorrichtung zum Herstellen einer Dentalprothese kann also durch ein Softwareupdate mit einer geeigneten Programmierung in eine erfindungsgemäße Vorrichtung umgewandelt werden.

Dabei kann vorgesehen sein, dass die Vorrichtung ein Gegenhalterungsstruktur-Berechnungsmodul aufweist, das die Berechnung und Positionierung einer Gegenhalterungsstruktur in der Oberfläche des Fräskörpers relativ zu der Verbindungsoberfläche und bevorzugt innerhalb der Verbindungsoberfläche durchführt, wobei die Gegenhalterungsstruktur ein zu einer Halterungsstruktur einer Prothesenbasisvorform passendes Gegenstück bildet, wobei vorzugsweise das Verbindungsoberflächen-Steuerungsmodul für eine CAM-Vorrichtung programmiert ist zur Steuerung der subtraktiven Herstellung der mit dem Verbindungsoberflächen-Berechnungsmodul und dem Gegenhalterungsstruktur-Berechnungsmodul berechneten Verbindungsoberfläche mit der Gegenhalterungsstruktur in dem Fräskörper.

Der Erfindung liegt die überraschende Erkenntnis zugrunde, dass es durch die Verwendung einer Prothesenbasisvorform, die mit Positionierhilfen (in Form von Halterungsstrukturen und Gegenhalterungsstrukturen) auf einen individuell (entsprechend eines virtuellen Modells einer Verbindungsoberfläche) bearbeiteten Fräskörpers zur Herstellung von Prothesenzähnen aufgebracht und mit zumindest einem fluiden polymerisierbaren Kunststoff oder Klebstoff verbunden wird, gelingt, eine Vorstufe (oder Zwischenprodukt) zur Herstellung einer Dentalprothese zu schaffen, aus der eine endgültige individuelle Dentalprothese mittels eines subtraktiven CAM-Verfahrens herausgearbeitet werden kann, ohne dass dabei lange Bearbeitungszeiten mit starker Abnutzung der Werkzeuge und große Abfallmengen der zu bearbeitenden Materialien entstehen. Dabei kann ein Zwischenraum zum Einfüllen oder Auftragen eines fluiden polymerisierbaren Kunststoffs oder Klebstoffs angewendet werden, wobei die Menge des verbrauchten fluiden polymerisierbaren Kunststoffs oder Klebstoffs geringgehalten werden kann. Es ist möglich große Anteile sowohl der Prothesenzähne als auch der Prothesenbasis oder sogar beide Teile vollständig aus Materialien zu fertigen, die nicht aus einem ausgehärteten und zuvor fluiden fließfähigen Kunststoff (wie einem Pulver-Flüssigkeits-PMMA) bestehen.

Durch die bereits grob den Endmaßen entsprechenden Basisgeometrie kann ein signifikant verringerter Materialverbrauch erreicht werden. Auch kann eine größere Bandbreite an Werkstoffen zum Einsatz kommen, eine Limitierung auf PMMA besteht nicht mehr. Aufgrund des verringerten subtraktiven Abtrags lassen sich auch Fräszeiten signifikant verringern. Durch das erst im verklebten beziehungsweise verbundenen Zustand finale Überfräsen entspricht das Ergebnis mit hoher Genauigkeit der digitalen Datenbasis, also dem virtuellen dreidimensionalen Modell der herzustellenden Dentalprothese.

Durch das erfindungsgemäße Verfahren wird eine hohe Passgenauigkeit des dentalen Formkörpers durch direktes Fräsen der finalen Formgebung erreicht. Es entsteht kein Aufwand bei einem Verkleben von einzelnen Prothesenzähnen und es entstehen im dentalen Formkörper keine Inhomogenitäten durch einen Fügeprozess. Gleichzeitig kann durch vollständiges Aushärten des Fräskörpers oder durch die Verwendung eines besonders harten und festen Fräskörpers ein besonders abrasionsfestes Material für Prothesenzähne und durch Verwenden eines geschichteten Fräskörpers ein besonders ästhetisch ansprechendes Prothesenzahnmaterial gewonnen werden. Bei Dentalprothesen ergibt sich ein natürlicher Farbübergang zahnfleischfarben-zahnfarben an den richtigen Stellen und es muss hierbei kein Kompromiss eingegangen werden. Eine besonders hohe Ästhetik kann dabei durch die Verwendung von Multilayer-Frässcheiben als zahnfarbener Vollkörper erreicht werden. Ein besonders hochwertiges Erscheinungsbild der hergestellten Dentalprothese kann dabei dadurch unterstützt werden, dass der zumindest eine fluide polymerisierbare Kunststoff oder Klebstoff eine andere Färbung und/oder Transparenz und/oder eine andere äußere Erscheinung hat als das Material der Prothesenbasisvorform.

Die Herstellung aus dem Fräskörper, dem ausgehärteten fluiden polymerisierbaren Kunststoffs oder Klebstoffs, der Prothesenbasisvorform und mit dem erfindungsgemäßen Verfahren kann in einem lediglich zweistufigen oder dreistufigen Herstellungsprozess erfolgen. Es kann also ein zweistufiges oder dreistufiges Verfahren zur Herstellung der dentalen Formkörper verwendet werden. Des Weiteren sind keine unterschiedlichen Formvarianten an Rohlingen beziehungsweise Fräskörpern notwendig. Es kann aber auch ein sehr geringer Satz unterschiedlich großer Fräsrohlinge verwendet werden beziehungsweise vorteilhaft sein.

Ein beispielhaftes erfindungsgemäßes Verfahren zur Herstellung einer Dentalprothese (dentalen Vollprothese oder dentale Teilprothese als dentaler Formkörper) kann den folgenden Ablauf aufweisen:
1. Digitales Design der prothetischen Arbeit und Separierung in mehrere Datensegmente. Benötigt werden Daten zur okklusalen beziehungsweise oralen Oberseite, basalen Unterseite der Dentalprothese sowie Zwischenflächendaten bestehend aus basaler Fläche der zahnfarbenen Anteile und Oberseite (oraler Seite) der zahnfleischfarbenen Anteile als Verbindungsoberfläche. Bei der Erstellung der Daten zur okklusalen beziehungsweise oralen Oberseite ist gegebenenfalls im CAD ein zusätzlicher Offset auf die zahnfleischfarbenen Anteile vorzusehen.
2. Entwicklung einer geeigneten Frässtrategie zur Verarbeitung der einzelnen Prozessschritte. Bevorzugt wird eine einseitige Bearbeitung der Unterseite, sowie eine Nullpunktverschiebung passend zu dem verwendeten Fräskörper sowie vorzugsweise eine weitere Nullpunktverschiebung für die Bearbeitung beider Seiten mit entsprechender Nullpunktverschiebung für Ober- und Unterseite getrennt voneinander geplant beziehungsweise anschließend durchgeführt.
3. Befestigen eines in der Größe mindestens den zahnfarbenen Anteilen entsprechenden Fräskörpers oder eines zahnfarbenen Vollkörpers des Fräskörpers in der Fräsmaschine und fräsen der Zwischenflächendaten und der Daten zur okklusalen beziehungsweise oralen Oberseite der Prothesenbasis von basal, gegebenenfalls mit leichtem Offset der zahnfleischfarbenen Anteile (der Prothesenbasis) in oraler Richtung. Der Fräskörper oder der zahnfarbene Vollkörper kann vorzugsweise vor der Positionierung mit einer Positionsmarkierung versehen werden, die eine Repositionierung ermöglicht.
4. Herstellen der Prothesenbasisvorform mit einem additiven CAM-Verfahren entsprechend dem digitalen Design gegebenenfalls mit Offset zur Vergrößerung der basalen Seite der Prothesenbasisvorform und zur Reduzierung von Material auf der oralen Seite der Prothesenbasisvorform im Vergleich zur Prothesenbasis gemäß dem virtuellen Modell der Dentalprothese.
5. Entnahme des teilgefrästen Fräskörpers und aufsetzen der Prothesenbasisvorform auf den teilgefrästen Fräskörper mit Hilfe von Positionierhilfen zur korrekten Ausrichtung der Prothesenbasisvorform auf dem teilgefrästen Fräskörper entsprechend dem digitalen Design der Dentalprothese, so dass ein Zwischenraum zwischen der Prothesenbasisvorform und dem teilgefrästen Fräskörper verbleibt.
6. Auffüllen des Zwischenraums oder vorheriges Auftragen auf den den Zwischenraum begrenzenden Oberflächen der Prothesenbasisvorform und/oder des teilgefrästen Fräskörpers mit einem fluiden polymerisierbaren Kunststoff oder Klebstoff (bevorzugt mit einem Pulver-Flüssigkeitssystem) und Polymerisation im analogen Fertigungsverfahren. Danach gegebenenfalls notwendige Nachbehandlung des ausgehärteten Kunststoffmaterials, wie zum Beispiel durch eine Wasserlagerung.
7. Repositionieren des aufgefüllten teilgefrästen Verbunds in der Fräsmaschine und Fräsen der Außengeometrien basal und oral gemäß dem finalen Prothesendesign.

Als Abschluss des Verfahrens kann eine Oberflächenvergütung durch Politur und/oder chemische Behandlung der Dentalprothese erfolgen.

Im Folgenden werden Ausführungsbeispiele der Erfindung anhand von zehn schematisch dargestellten Figuren und einem Ablaufdiagramm erläutert, ohne jedoch dabei die Erfindung zu beschränken. Dabei zeigt:
Figur 1: eine schematische perspektivische Ansicht auf ein virtuelles dreidimensionales Modell einer Prothesenbasis;
Figur 2: eine schematische perspektivische Ansicht auf ein virtuelles dreidimensionales Modell von Prothesenzähnen passend zur Prothesenbasis nach Figur 1;
Figur 3: eine schematische perspektivische Ansicht auf ein virtuelles dreidimensionales Modell eines einseitig bearbeiteten Fräskörpers mit eingearbeiteter Verbindungsoberfläche;
Figur 4: eine schematische perspektivische Ansicht auf einen einseitig bearbeiteten Fräskörper mit eingearbeiteter Verbindungsoberfläche;
Figur 5: eine schematische perspektivische Ansicht einer Prothesenbasisvorform;
Figur 6: eine schematische perspektivische Ansicht auf den einseitig bearbeiteten Fräskörper mit eingearbeiteter Verbindungsoberfläche nach Figur 4 mit daran befestigter Prothesenbasisvorform;
Figur 7: eine schematische perspektivische Ansicht auf einen einseitig bearbeiteten Fräskörper mit eingearbeiteter Verbindungsoberfläche mit daran befestigter Prothesenbasisvorform;
Figur 8: eine schematische perspektivische Ansicht auf den einseitig bearbeiteten Fräskörper mit eingearbeiteter Verbindungsoberfläche nach Figur 4 mit daran befestigter Prothesenbasisvorform und eingefülltem fluiden polymerisierbaren Kunststoff;
Figur 9: eine schematische perspektivische Aufsicht auf die orale Seite der aus dem Fräskörper, dem ausgehärteten Kunststoff und der Prothesenbasisvorform herausgearbeiteten Dentalprothese, die über Stege noch mit dem restlichen Fräskörper verbunden ist;
Figur 10: eine schematische perspektivische Ansicht der mit dem erfindungsgemäßen Verfahren hergestellten Dentalprothese; und
Figur 11: den Ablauf eines erfindungsgemäßen Verfahrens zum Herstellen einer Dentalprothese.

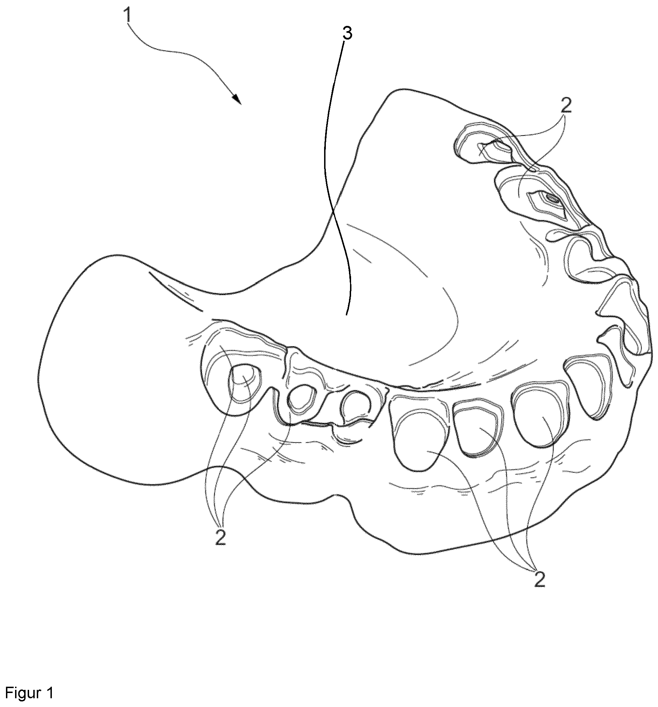

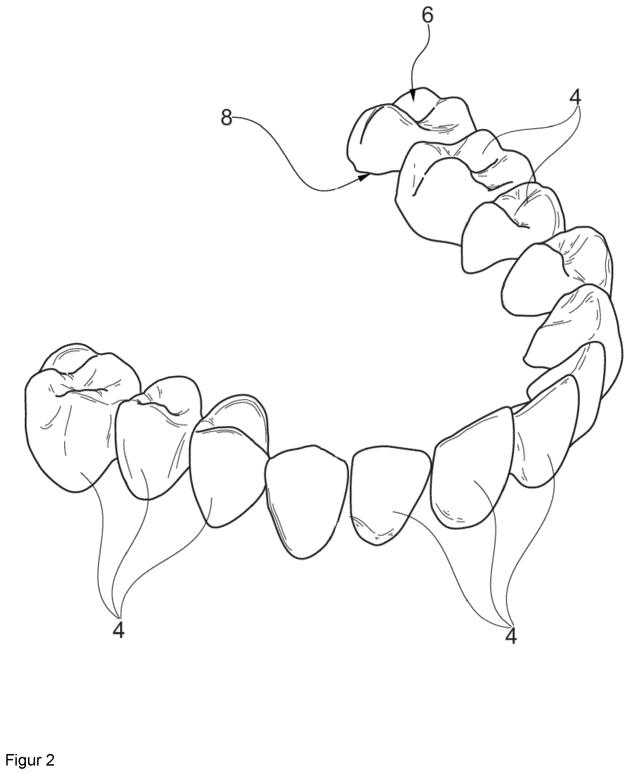

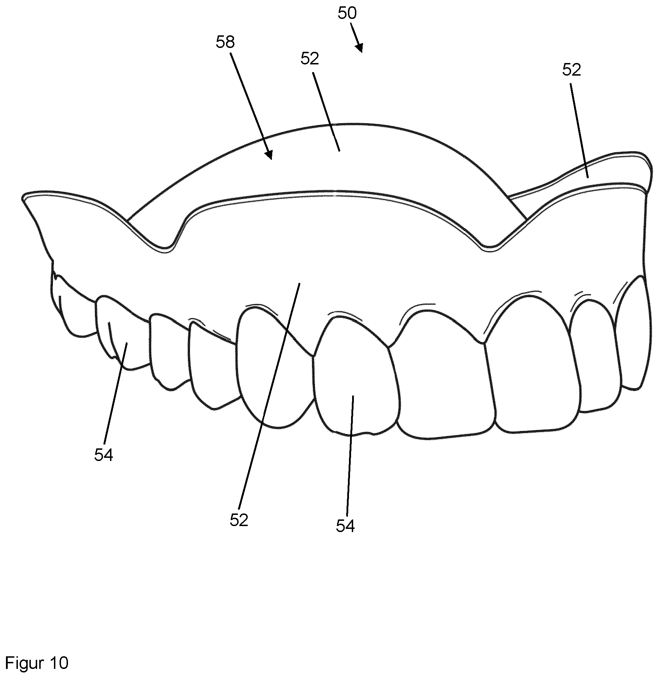

Die Figuren 1 und 2 zeigen eine schematische perspektivische Ansicht auf ein virtuelles dreidimensionales Modell einer Prothesenbasis 1 (Figur 1) und auf ein virtuelles dreidimensionales Modell von Prothesenzähnen 4 (Figur 2) passend zu der Prothesenbasis 1 nach Figur 1. Die virtuellen dreidimensionalen Modelle der Prothesenbasis 1 und der Prothesenzähne 4 können rechnerisch durch File-Splitting eines virtuellen dreidimensionalen Modells der zu erzeugenden Dentalprothese (siehe Figur 10) gewonnen werden. Dazu können die äußeren Formen der Prothesenzähne 4 und der Prothesenbasis 1 im CAD-Modell voneinander getrennt werden, so dass diese, wenn sie wieder zusammengesetzt werden, die vollständige Dentalprothese ergeben.

Die Kontaktfläche zwischen der Prothesenbasis 1 und den Prothesenzähnen 4 wird durch eine Verbindungsoberfläche 2 gebildet, die die Form von Zahntaschen in der Prothesenbasis 1 haben kann. An den basalen Seiten 8 der Prothesenzähne 4, die okklusalen Enden 6 gegenüberliegend angeordnet sind, befindet sich eine zur Verbindungsoberfläche 2 flächenbündig passende Oberfläche. Die Prothesenbasis 1 kann eine Gaumenplatte 3 aufweisen, wenn sie für den Oberkiefer vorgesehen ist. Eine Prothesenbasis für den Unterkiefer weist keine Gaumenplatte auf.

Die Prothesenzähne 4 sollen in der fertigen Dentalprothese aus einem zahnfarbenen (weißlichen beziehungsweise cremefarbenen) harten Kunststoff oder aus einer zahnfarbenen (weißlichen beziehungsweise cremefarbenen) harten Keramik bestehen, während die Prothesenbasis 1 in der fertigen Dentalprothese aus einem zahnfleischfarbenen (rosafarbenen) Kunststoff bestehen soll.

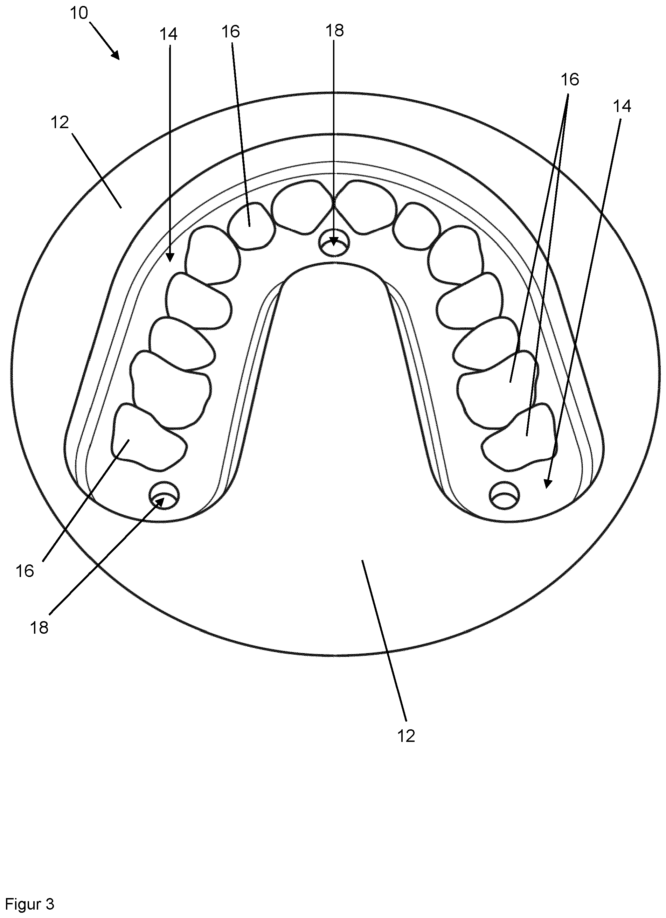

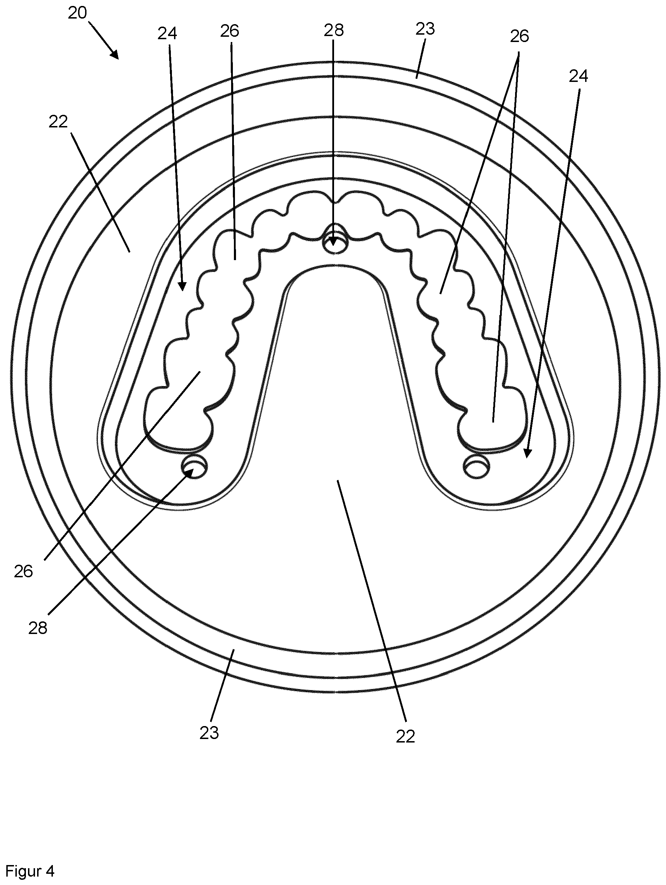

Figur 3 zeigt eine schematische perspektivische Ansicht auf ein virtuelles dreidimensionales Modell eines einseitig bearbeiteten Fräskörpers 10 mit eingearbeiteter Verbindungsoberfläche 16 und Figur 4 zeigt eine schematische perspektivische Ansicht auf einen einseitig bearbeiteten Fräskörper mit eingearbeiteter Verbindungsoberfläche 26, der nach Maßgabe des virtuellen dreidimensionalen Modells nach Figur 3 mit einem subtraktiven CAM-Verfahren hergestellt wurde.

Das virtuelle dreidimensionale Modell des einseitig bearbeiteten Fräskörpers 10 kann mit einem CAD-Verfahren erzeugt werden und enthält die Verbindungsoberfläche 16, die einer virtuellen Verbindungsoberfläche 16 zwischen Prothesenzähnen 4 und einer Prothesenbasis 1 in einem virtuellen dreidimensionalen Modell der zu erzeugenden Dentalprothese entspricht.

Das virtuelle dreidimensionale Modell des einseitig bearbeiteten Fräskörpers 10 soll auf einer Fräskörperoberfläche 12 bearbeitet werden. Demzufolge sind virtuelle dreidimensionale Oberflächen als Strukturen in dieser Fräskörperoberfläche 12 angeordnet.

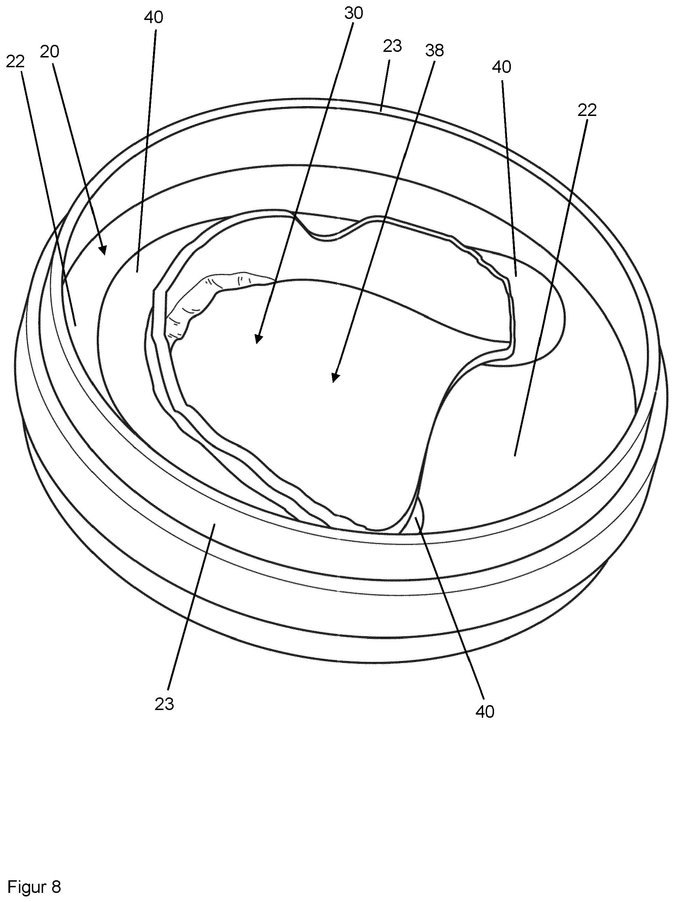

Um die Verbindungsoberfläche 16 herum kann eine Fließrinne 14 vorgesehen werden, die zur Aufnahme von fluidem polymerisierbarem Kunststoff 40 (siehe Figur 8) oder Klebstoff vorgesehen ist. Die Fließrinne 14 kann ringförmig geformt sein.

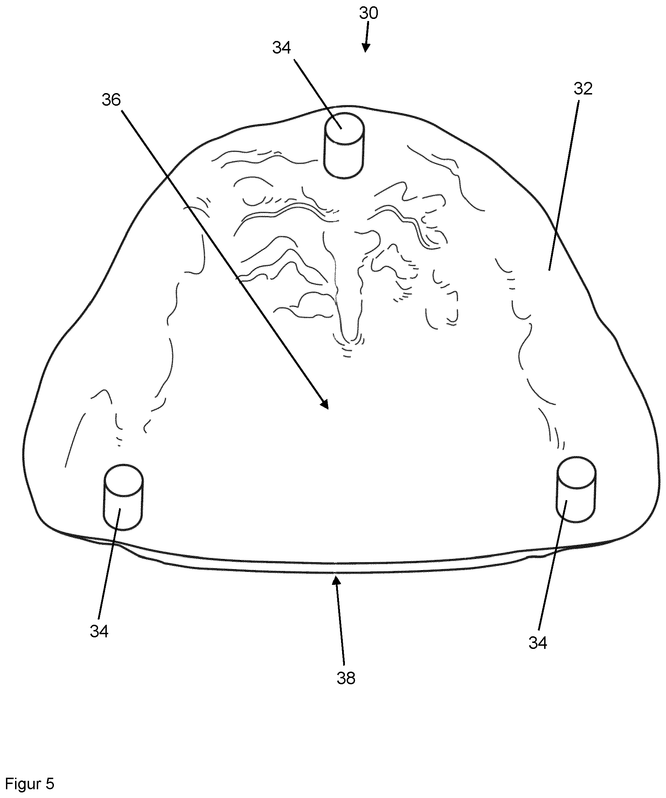

Des Weiteren kann in dem virtuellen dreidimensionalen Modell des bearbeiteten Fräskörpers 10 eine virtuelle dreidimensionale Gegenhalterungsstruktur 18 in Form von drei zylindrischen Löchern angeordnet sein. Die Gegenhalterungsstruktur 18 dient der Befestigung einer Prothesenbasisvorform 30 (siehe Figur 5).

Anhand dieses virtuellen dreidimensionalen Modells des bearbeiteten Fräskörpers 10 wird mit einem subtraktiven CAM-Verfahren der reale Fräskörper 20 an einer Fräskörperoberfläche 22 bearbeitet und die Strukturen entsprechend dem virtuellen dreidimensionalen Modell herausgearbeitet beziehungsweise ein gearbeitet. Die Strukturen können dementsprechend eine Fließrinne 24, die Verbindungsoberfläche 26 und eine Gegenhalterungsstruktur 28 aufweisen.

Der Fräskörper 20 kann eine umlaufende, ringförmige Wandung 23 aufweisen. Diese umlaufende, ringförmige Wandung 23 erlaubt ein Auffüllen der Fräskörperoberfläche 22 mit dem fluiden polymerisierbaren Kunststoff 40 oder Klebstoff über die Fließrinne 24 hinaus oder kann auch einfach nur als Sicherheitsmechanismus dienen, der verhindert, dass beim Auffüllen oder Verkleben der fluide polymerisierbare Kunststoff 40 oder Klebstoff austritt und die Umgebung verunreinigt.

Figur 5 zeigt eine schematische perspektivische Ansicht auf eine Prothesenbasisvorform 30. Die Prothesenbasisvorform 30 weist eine orale Oberfläche 32 zum Verbinden der Prothesenzähne 54 beziehungsweise zum Verbinden mit der Verbindungsoberfläche 26 des bearbeiteten Fräskörpers 20 auf.

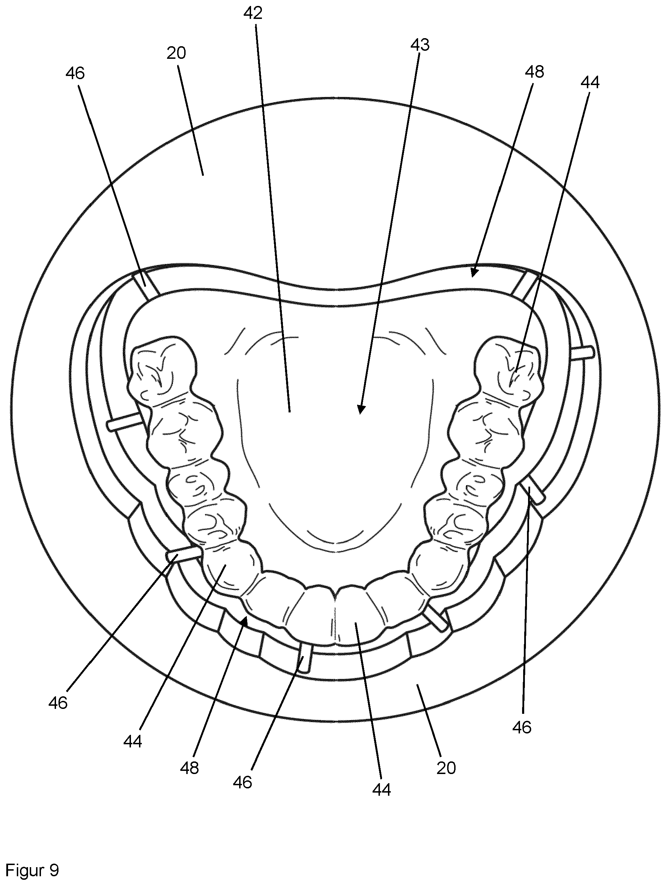

Die Prothesenbasisvorform 30 kann mit einem generativen (additiven) CAM-Verfahren erzeugt werden. Dazu kann ein virtuelles dreidimensionales Modell der Prothesenbasis 1 als Ausgangsdatensatz verwendet werden. Durch einen Offset kann auf einer oralen Seite 36 des virtuellen dreidimensionalen Modells der Prothesenbasis 1 Volumen entfernt werden, um einen Zwischenraum 39 oder einen Spalt zwischen einer oralen Oberfläche 32 zum Verbinden der Prothesenzähne 54 (beziehungsweise der Verbindungsoberfläche 26) und der Verbindungsoberfläche 26 bereitzustellen. Des Weiteren kann auf einer basalen Seite des virtuellen dreidimensionalen Modells der Prothesenbasis 1 Volumen ergänzt werden, um sicherzustellen, dass ausreichend Material der Prothesenbasisvorform 30 vorhanden ist, wenn später die Prothesenbasis 42, 52 (siehe Figuren 9 und 10) aus diesem Bereich subtraktiv herausgearbeitet werden soll.

Die Prothesenbasisvorform 30 weist eine orale Seite 36 und eine basale Seite 38 zur Auflage auf dem zahnlosen Kiefer auf. Bis auf gegebenenfalls den Offset kann die basale Seite 38 bereits gut zu der basalen Seite des virtuellen Modells der Dentalprothese beziehungsweise der Prothesenbasis 1 der Dentalprothese passen.

Auf der oralen Seite 36 der Prothesenbasisvorform 30 können Halterungsstrukturen 34 angeordnet sein oder werden. Die Halterungsstrukturen 34 sind vorzugsweise in Ort und Form genau passend zu den Gegenhalterungsstrukturen 28 ausgeführt. Hierzu können die Halterungsstrukturen 34 und die Gegenhalterungsstrukturen 28 bereits im virtuellen dreidimensionalen CAD-Modell der Prothesenbasisvorform 30 und/oder der bearbeiteten Oberfläche 24, 26, 28 im Fräskörper 20 geeignet konstruiert werden. Die Halterungsstrukturen 34 können beispielsweise als drei an unterschiedlichen Orten vorstehende zylindrische Zapfen ausgebildet sein. Dies erlaubt dann eine Lagerung gegen den bearbeiteten Fräskörper 20 an drei Punkten. Dies bewirkt eine exakte Positionierung der Prothesenbasisvorform 30 gegen den bearbeiten Fräskörper 20.

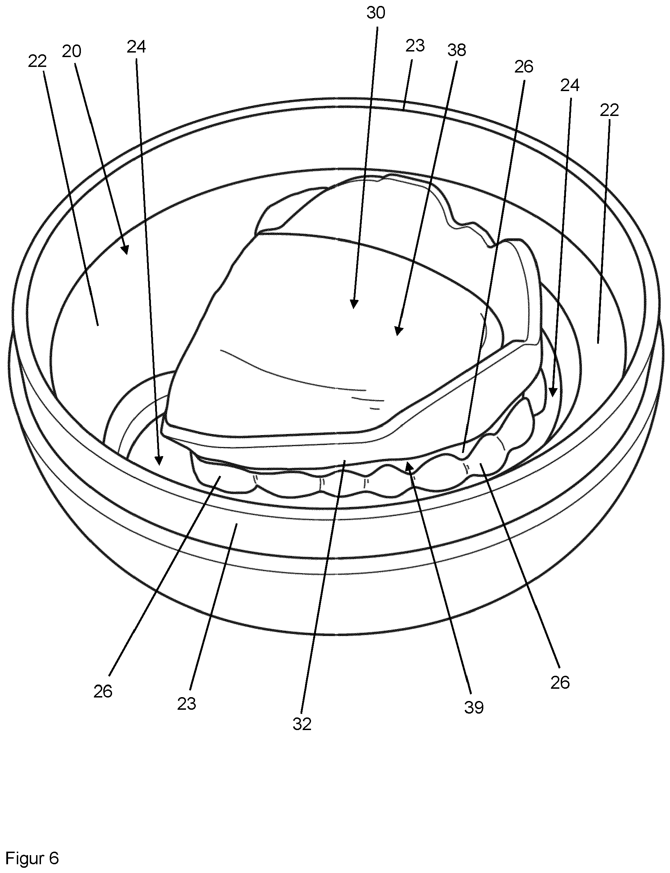

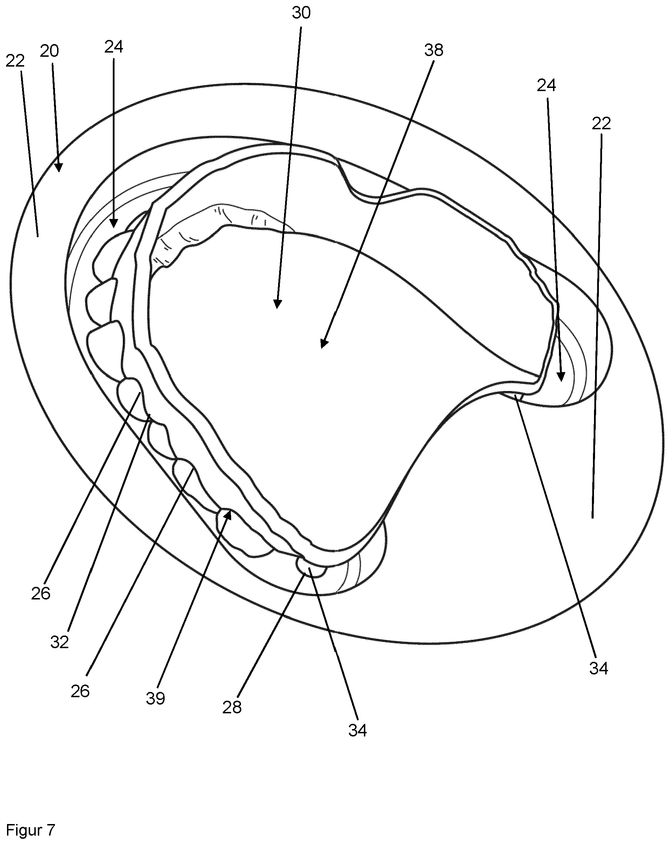

Zum Befestigen der Prothesenbasisvorform 30 (siehe Figur 5) an dem bearbeiteten Fräskörper 20 (siehe Figur 4) können die Prothesenbasisvorform 30 und der bearbeitete Fräskörper 20 über die Halterungsstrukturen 34 und die Gegenhalterungsstrukturen 28 miteinander verbunden werden. Dies ist in Figur 6 und Figur 7 gezeigt, die schematische perspektivische Ansichten des einseitig bearbeiteten Fräskörpers 20 mit eingearbeiteter Verbindungsoberfläche 26 und mit daran befestigter Prothesenbasisvorform 30 zeigen.

Die Prothesenbasisvorform 30 kann auch ein vorgefertigtes Bauteil sein, das für eine Gruppe von Patienten geeignet und entsprechend passend ausgewählt ist. Die dreidimensionale Form der oralen Seite 36 oder nur der oralen Oberfläche 32 ist dann vorzugsweise zusammen mit den Halterungsstrukturen 34 als Datensatz hinterlegt und kann bei der Konstruktion des virtuellen dreidimensionalen Modells der zu bearbeitenden Oberfläche 24, 26, 28 im Fräskörper oder der basalen Verbindungsoberfläche 26 berücksichtigt werden, so dass im zusammengesetzten Zustand ein definierter Zwischenraum 39 mit einem definierten Spaltmaß entsteht.

In jedem Fall wird oder ist die Prothesenbasisvorform 30 und wird die bearbeitete Oberfläche des Fräskörpers 20 derart hergestellt, dass im zusammengesetzten Zustand ein definierter Zwischenraum 39 mit einem definierten Spaltmaß entsteht. Der Zwischenraum 39 kann dabei auf die Art der gewünschten Befestigung der Prothesenbasisvorform 30 an dem Fräskörper 20 beziehungsweise an den Prothesenzähnen 54 (siehe Figur 10) abgestimmt sein. Wenn beispielsweise nur eine fluider polymerisierbarer Klebstoff zur Verbindung verwendet werden soll, der vor dem Zusammensetzen auf der Verbindungsoberfläche 26 und/oder der oralen Oberfläche 32 zum Verkleben aufgetragen werden kann, kann ein dünner Klebespalt zwischen 0,02 mm und 0,3 mm als Beabstandung ausreichen. Wenn ein fluider polymerisierbarer Kunststoff in den Zwischenraum 39 eingefüllt, injiziert oder gestopft werden soll, nachdem die Prothesenbasisvorform 30 mit dem bearbeiteten Fräskörper 20 verbunden wurde, dann ist ein größerer Spalt zwischen 0,1 mm und 2 mm als Beabstandung sinnvoller.

Hierzu zeigt Figur 8 eine schematische perspektivische Ansicht auf den einseitig bearbeiteten Fräskörper mit eingearbeiteter Verbindungsoberfläche nach Figur 4 mit daran befestigter Prothesenbasisvorform und in den Zwischenraum 39 eingefüllten fluiden polymerisierbaren Kunststoff 40. Der fluide polymerisierbare Kunststoff 40 kann entweder vor oder nach dem Befestigen der Prothesenbasisvorform 30 an dem bearbeiteten Fräskörper 20 aufgetragen oder injiziert werden. Der Prothesenkunststoff (1 oder 2-Komponenten) kann hierzu vorbereitet werden und in den Zwischenraum 39 injiziert werden. Bei Bedarf können bestimmte Bereiche vor dem Aufsetzen der Prothesenbasisvorform 30 bereits vorgefüllt werden. Vor dem Austritt von fluidem polymerisierbaren Kunststoff 40 oder Klebstoff kann der Aufbau umdreht werden und Überschüsse in Fließrinne 24 laufen. Alternativ zur Injektion kann auch einfach fluider polymerisierbarer Kunststoff 40 oder Klebstoff aufgebracht und anschließend die Prothesenbasisvorform 30 aufgesetzt werden

Es kann auch vorgesehen sein, eine Füllbohrung (nicht gezeigt) in dem Fräskörper 20 zu erzeugen. Dies kann beispielsweise während des subtraktiven Bearbeitens der Fräskörperoberfläche 22 zur Herstellung der Verbindungsoberfläche 28 erfolgen. Durch die Füllbohrung kann der fluide polymerisierbare Kunststoff 40 oder Klebstoff in den Zwischenraum 39 eingefüllt werden. Bei einer Dentalprothese 50 für den Oberkiefer mit Gaumenplatte kann die Füllbohrung mittig liegen, bei einer Dentalprothese für den Unterkiefer können mehrere Füllbohrungen bogenförmig im Kieferkammbereich angeordnet werden.

Anschließend wird der fluide polymerisierbare Kunststoff 40 in dem Zwischenraum 39 ausgehärtet oder teilgehärtet, so dass der fluide polymerisierbare Kunststoff 40 die Prothesenbasisvorform 30 mit dem bearbeiteten Fräskörper 20 fest verbindet. Das so entstandene Zwischenprodukt kann dann weiter bearbeitet werden. Die Prothesenbasisvorform 30 kann hierzu auf dem Fräskörper 20 fixiert werden. Hierzu kann ein Küvettenbügel verwendet werden.

In einem nächsten Schritt wird die eigentliche Dentalprothese 50 nach Maßgabe des virtuellen dreidimensionalen Modells der Dentalprothese 50 aus dem in Figur 8 gezeigten Zwischenprodukt mit einem subtraktiven CAM-Verfahren herausgearbeitet. Dazu bleibt die Prothesenbasis 42 über Stege 46 zunächst noch mit dem restlichen Fräskörper 20 verbunden. Diese Situation ist in Figur 9 gezeigt, wobei die Blickrichtung hier auf die orale Seite 43 der Dentalprothese erfolgt. Figur 9 zeigt dabei eine schematische perspektivische Aufsicht auf die okklusale Seite der aus dem Fräskörper 20, dem ausgehärteten Kunststoff 40 und der Prothesenbasisvorform 30 herausgearbeiteten Dentalprothese, die über die Stege 46 noch mit dem restlichen Fräskörper 20 verbunden ist. Der Fräskörper 20 wird nun auch von der der bisher bearbeiteten Fräskörperfläche 22 gegenüberliegenden (oralen oder okklusalen) Seite aus subtraktiv mit dem CAM-Verfahren bearbeitet, um die Prothesenzähne 44 aus dem Material des Fräskörpers 20 herauszuarbeiten. Es verbleibt eine Ausnehmung 48 zwischen der Dentalprothese 50 und dem restlichen Fräskörper 20. Die aus dem Fräskörper 20 erzeugten Zahnsegmente bleiben dabei stehen.

In einem nächsten Schritt werden die Stege 46 entfernt und so die fertige Dentalprothese 50 erzeugt. Hierzu zeigt Figur 10 eine schematische perspektivische Ansicht der mit dem erfindungsgemäßen Verfahren hergestellten Dentalprothese 50. Die Dentalprothese 50 weist eine Prothesenbasis 52, die aus dem Material der Prothesenbasisvorform 30 und aus dem ausgehärteten polymerisierbaren Kunststoff 40 besteht, und mehrere Prothesenzähne 54 auf, wobei die Prothesenzähne 54 aus dem Material des Fräskörpers 20 bestehen. Eine basale Seite 58 der Dentalprothese 50 ist zur Auflage auf dem zahnlosen Zahnfleisch und gegebenenfalls dem Gaumen des Patienten vorgesehen.

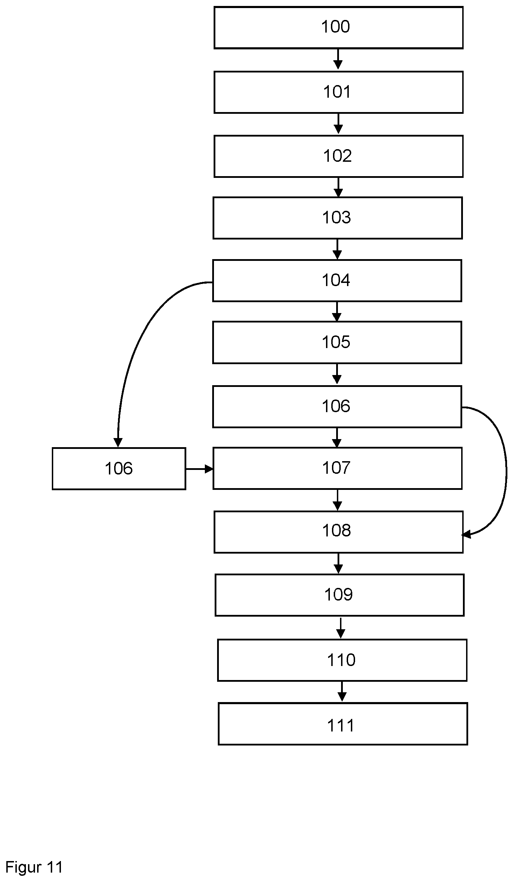

Im Folgenden wird ein beispielhaftes Verfahren anhand der mit den Figuren 1 bis 10 gezeigten Zwischen- und Endprodukte erläutert. Der Ablauf des beispielhaften Verfahrens ist in Figur 11 schematisch dargestellt.

In einem ersten Arbeitsschritt 100 wird ein virtuelles dreidimensionales Modell der zu erzeugenden Dentalprothese 50 mit CAD berechnet.

In einem darauffolgenden zweiten Arbeitsschritt 101 erfolgt eine Berechnung der Verbindungsoberfläche 16 zwischen Prothesenzähnen 4 und Prothesenbasis 1 der Dentalprothese im virtuellen dreidimensionalen Modell. Dies kann beispielsweise durch File-Splitting des virtuellen dreidimensionalen Modells der Dentalprothese in einen Zahnanteil und einen Prothesenbasisanteil geschehen.

Anschließend wird in einem dritten Arbeitsschritt 102 eine Berechnung der in dem Fräskörper 20 herzustellenden Oberfläche 24, 26, 28 aufweisend die Verbindungsoberfläche 16, 26, die Gegenhalterungsstruktur 28 sowie gegebenenfalls die Fließrinne 24 mit CAD-Verfahren durchgeführt.

Basierend hierauf wird in einem vierten Arbeitsschritt 103 die herzustellenden Oberfläche 24, 26, 28 in der Fräskörperoberfläche 22 im Fräskörper 20 mit einem subtraktiven CAM-Verfahren hergestellt. Dabei wird auch die Verbindungsoberfläche 26 mit dem CAM-Verfahren erzeugt.

In einem fünften Arbeitsschritt 104 erfolgt ein Herstellen oder Bereitstellen der Prothesenbasisvorform 30. Die Prothesenbasisvorform 30 kann also bereits vorliegen oder sie kann beispielsweise mit einem additiven / generativen CAM-Verfahren nach Maßgabe des virtuellen dreidimensionalen Modells der Prothesenbasis 1 (gegebenenfalls mit Offset) erzeugt werden, wie oben beschrieben. Hierzu kann die Prothesenbasisvorform 30 beispielsweise aus einem Kunststoff gedruckt werden.

In einem sechsten Arbeitsschritt 105 kann ein Auftragen von fluidem polymerisierbarem Kunststoff 40 oder Klebstoff auf die Prothesenbasisvorform 30 und/oder der Verbindungsoberfläche 26 im Fräskörper 20 erfolgen.

Alternativ kann direkt der siebte Arbeitsschritt 106 durchgeführt werden, bei dem das Befestigen der Prothesenbasisvorform 30 an dem bearbeiteten Fräskörper 20 erfolgt.

In einem nachfolgenden achten Arbeitsschritt 107 erfolgt ein Einfüllen von fluidem polymerisierbarem Kunststoff 40 oder Klebstoff in den Zwischenraum 39 zwischen die Prothesenbasisvorform 30 und dem bearbeiteten Fräskörper 20. Entweder der sechste Arbeitsschritt 105 oder der achte Arbeitsschritt 107 muss erfolgen, so wie sich das aus dem Flussdiagramm nach Figur 11 ergibt.

In einem neunten Arbeitsschritt 108 erfolgt ein Aushärten oder Teilhärten des fluiden polymerisierbaren Kunststoffs 40 oder Klebstoffs und damit eine feste Verbindung des bearbeiteten Fräskörpers 20 mit der Prothesenbasisvorform 30.

In einem zehnten Arbeitsschritt 109 erfolgt ein subtraktives Herausarbeiten der Dentalprothese 50 aus dem im neunten Arbeitsschritt 108 erzeugten Verbund.

Optional kann anschließend in einem elften Arbeitsschritt 110 ein Nachhärten oder Endhärten der Dentalprothese 50 erfolgen.

In einem optionalen zwölften Arbeitsschritt 111 kann eine Endbearbeitung der Dentalprothese 50 erfolgen, beispielweise durch eine Oberflächenvergütung und/oder Politur der Dentalprothese 50.

Die in der voranstehenden Beschreibung, sowie den Ansprüchen, Figuren und Ausführungsbeispielen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Prothesenbasis (virtuelles Modell)
- 2: Verbindungsoberfläche (virtuelles Modell)
- 3: Gaumenplatte (virtuelles Modell)
- 4: Prothesenzähne (virtuelles Modell)
- 6: Okklusale Oberfläche der Prothesenzähne (virtuelles Modell)
- 8: Basale Seite der Prothesenzähne (virtuelles Modell)
- 10: Einseitig bearbeiteter Fräskörper (virtuelles Modell)
- 12: Fräskörperoberfläche (virtuelles Modell)
- 14: Fließrinne (virtuelles Modell)
- 16: Verbindungsoberfläche (virtuelles Modell)
- 18: Gegenhalterungsstruktur (virtuelles Modell)
- 20: Einseitig bearbeiteter Fräskörper
- 22: Oberfläche des Fräskörpers
- 23: Ringförmige Wandung
- 24: Fließrinne
- 26: Verbindungsoberfläche
- 28: Gegenhalterungsstruktur
- 30: Prothesenbasisvorform
- 32: Orale Oberfläche zum Verbinden der Prothesenzähne
- 34: Halterungsstruktur
- 36: Orale Seite
- 38: Basale Seite
- 39: Zwischenraum
- 40: Fluider polymerisierbarer Kunststoff
- 42: Prothesenbasis
- 43: Orale Seite der Prothesenbasis
- 44: Prothesenzähne
- 46: Steg
- 48: Ausnehmung
- 50: Dentalprothese
- 52: Prothesenbasis
- 54: Prothesenzähne
- 58: Basale Seite
- 100: Arbeitsschritt: Berechnung eines virtuellen 3D-Modells einer Dentalprothese
- 101: Arbeitsschritt: Berechnung einer Verbindungsoberfläche zwischen Prothesenzähnen und Prothesenbasis der Dentalprothese
- 102: Arbeitsschritt: Berechnung der in einem Fräskörper herzustellenden Oberfläche aufweisend die Verbindungsoberfläche mit CAD-Verfahren
- 103: Arbeitsschritt: Herstellen der herzustellenden Oberfläche im Fräskörper mit der Verbindungsoberfläche mit CAM-Verfahren
- 104: Arbeitsschritt: Herstellen oder Bereitstellen der Prothesenbasisvorform
- 105: Arbeitsschritt: Auftragen von fluidem polymerisierbarem Kunststoff oder Klebstoff auf die Prothesenbasisvorform und/oder der Verbindungsoberfläche im Fräskörper
- 106: Arbeitsschritt: Befestigen der Prothesenbasisvorform an dem bearbeiteten Fräskörper
- 107: Arbeitsschritt: Einfüllen von fluidem polymerisierbarem Kunststoff oder Klebstoff in einen Zwischenraum zwischen die Prothesenbasisvorform und dem Fräskörper
- 108: Arbeitsschritt: Aushärten des fluiden polymerisierbaren Kunststoffs oder Klebstoffs
- 109: Arbeitsschritt: Subtraktives Herausarbeiten der Dentalprothese
- 110: Optionaler Arbeitsschritt: Nachhärten oder Endhärten der Dentalprothese
- 111: Optionaler Arbeitsschritt: Endbearbeitung der Dentalprothese

## Patentansprüche

1. Verfahren zur Herstellung einer Dentalprothese (50), wobei die Dentalprothese (50) mehrere Prothesenzähne (54) und eine Prothesenbasis (52) aufweist, wobei die Prothesenbasis (52) einen zahnfleischfarbenen Kunststoff aufweist und wobei die Prothesenzähne (54) und die Prothesenbasis (52) bei dem Verfahren fest miteinander verbunden werden, wobei das Verfahren durch die folgenden Schritte gekennzeichnet ist
A) Bereitstellen eines Fräskörpers (20) zur Herstellung der Prothesenzähne (54) aus einem für Prothesenzähne (54) geeigneten Material und Bereitstellen einer Prothesenbasisvorform (30), wobei die Prothesenbasisvorform (30) eine Halterungsstruktur (34) an einer oralen Seite (36) der Prothesenbasisvorform (30) aufweist;
B) Herstellen einer Verbindungsoberfläche (26) zwischen den Prothesenzähnen (54) und der Prothesenbasis (52) in einer Oberfläche (22) des Fräskörpers (20) mit Hilfe eines subtraktiven CAM-Verfahrens nach Maßgabe eines virtuellen dreidimensionalen Modells der Verbindungsoberfläche (16) der Prothesenzähne (4) zu der Prothesenbasis (1) in der Dentalprothese (50), wobei die Oberfläche (22) des Fräskörpers (20) eine ebene Oberfläche ist;
C) Herstellen einer Gegenhalterungsstruktur (28) in der Oberfläche (22) des Fräskörpers (20), wobei die Gegenhalterungsstruktur (28) ein zur Halterungsstruktur (34) der Prothesenbasisvorform (30) passendes Gegenstück bildet, oder der Fräskörper (20) weist die zur Halterungsstruktur (34) der Prothesenbasisvorform (30) passende Gegenhalterungsstruktur (28) auf;
D) nach den Schritten A), B) und C) Befestigen der Prothesenbasisvorform (30) mit der Halterungsstruktur (34) an der Gegenhalterungsstruktur (28) des Fräskörpers (20), wobei die Prothesenbasisvorform (30) außer an der Gegenhalterungsstruktur (28) von der bearbeiteten Oberfläche (22) des Fräskörpers (20) beabstandet befestigt wird, so dass ein nach außen offener Zwischenraum (39) zwischen der Prothesenbasisvorform (30) und dem Fräskörper (20) entsteht;
E1) nach Schritt D) Einfüllen zumindest eines fluiden polymerisierbaren Kunststoffs (40) oder Klebstoffs in den Zwischenraum (39) zwischen dem Fräskörper (20) und der Prothesenbasisvorform (30) und in das in Schritt B) abgetragene Volumen in der Oberfläche (22) des Fräskörpers (20); und/oder
E2) vor Schritt D) Auftragen zumindest eines fluiden polymerisierbaren Kunststoffs (40) oder Klebstoffs auf eine orale Oberfläche (32) der Prothesenbasisvorform (30) und/oder auf die in Schritt B) hergestellte Verbindungsoberfläche (26) des Fräskörpers (20);
F) nach Schritt E1) oder nach Schritt E2) oder nach Schritt D) Aushärten oder Teilhärten des zumindest einen fluiden polymerisierbaren Kunststoffs (40) oder Klebstoffs, wobei beim Aushärten ein ausgehärtetes Kunststoffmaterial im Zwischenraum (39) entsteht oder beim Teilhärten ein teilweise polymerisiertes Kunststoffmaterial im Zwischenraum (39) entsteht, wobei das ausgehärtete Kunststoffmaterial oder das teilweise polymerisierte Kunststoffmaterial die Prothesenbasisvorform (30) mit dem Material des Fräskörpers (20) fest und flächenbündig verbindet; und
G) nach Schritt F) subtraktives Bearbeiten des ausgehärteten oder teilweise polymerisierten Kunststoffmaterials, der Prothesenbasisvorform (30) und des Fräskörpers (20) mit einem CAM-Verfahren nach Maßgabe eines virtuellen Modells einer äußeren Oberfläche der Dentalprothese (50), so dass die Dentalprothese (50) aus der Prothesenbasisvorform (30), dem ausgehärteten oder teilweise polymerisierten Kunststoffmaterial und dem Material des Fräskörpers (20) subtraktiv herausgearbeitet wird.

2. Verfahren nach Anspruch 1, **dadurch gekennzeichnet, dass**
nach Schritt F) oder nach Schritt G) ein Schritt H) erfolgt, bei dem das teilweise polymerisierte Kunststoffmaterial endgehärtet wird, insbesondere durch Lichtpolymerisation endgehärtet wird, wobei vorzugsweise im Anschluss an Schritt G) und H) eine Politur der Oberfläche der Dentalprothese (50) und/oder eine Oberflächenveredelung der Dentalprothese (50) durchgeführt wird, und/oder
beim Aushärten oder Teilhärten in Schritt F) eine Lichtpolymerisation durchgeführt wird, wobei bevorzugt nach Schritt G) eine Endhärtung durch Lichtpolymerisation erfolgt, und/oder
das ausgehärtete Kunststoffmaterial oder das teilweise polymerisierte Kunststoffmaterial nach vollständiger Aushärtung von dem zahnfleischfarbenen Kunststoff der Prothesenbasisvorform (30) abweichende Materialeigenschaften und/oder Farbe aufweist, wobei bevorzugt das ausgehärtete Kunststoffmaterial oder das teilweise polymerisierte Kunststoffmaterial nach vollständiger Aushärtung eine von dem zahnfleischfarbenen Kunststoff des Prothesenbasisvorform (30) abweichende Härte und/oder Transparenz aufweist.

3. Verfahren nach einem der vorangehenden Ansprüche, **dadurch gekennzeichnet, dass** der Fräskörper (20) eine umlaufende Wandung aufweist, wobei die umlaufende Wandung des Fräskörpers (20) in den Schritten B) bis F) erhalten bleibt, wobei bevorzugt in Schritt E1) die umlaufende Wandung in Kontakt mit dem zumindest einen fluiden polymerisierbaren Kunststoff (40) oder Klebstoff kommt, besonders bevorzugt der zumindest eine fluide polymerisierbare Kunststoff (40) oder Klebstoff derart in den Zwischenraum (39) gefüllt wird, dass der Pegel bis an die umlaufende Wandung steigt, aber unterhalb der umlaufenden Wandung bleibt, und/oder
die Prothesenbasisvorform (30) in Schritt D) an dem Fräskörper (20) fixiert wird, bevorzugt mit der Halterungsstruktur (34) an der Gegenhalterungsstruktur (28) an den Fräskörper (20) geklebt wird, wobei besonders bevorzugt
die Prothesenbasisvorform (30) zumindest teilweise oder vollständig aus einem zahnfleischfarbenen Kunststoff besteht.

4. Verfahren nach einem der vorangehenden Ansprüche, **dadurch gekennzeichnet, dass** vor Schritt A) die Prothesenbasisvorform (30) auf Basis des virtuellen dreidimensionalen Modells einer Oberfläche einer basalen Seite der Prothesenbasis (52) der Dentalprothese (50) mit einem CAM-Verfahren hergestellt wird, insbesondere mit einem additiven CAM-Verfahren hergestellt wird, wobei bevorzugt die basale Seite der Prothesenbasisvorform (30) mit einem Offset in Form einer basalen Materialverdickung erzeugt wird, wobei besonders bevorzugt
bei der Herstellung der Prothesenbasisvorform (30) eine Materialverstärkung vorgesehen wird, wobei die Materialverstärkung eine Stärke von mindestens 0,1 mm im Vergleich zur Oberfläche des virtuellen dreidimensionalen Modells der Dentalprothese (50) im Bereich der basalen Seite der Prothesenbasis (52) aufweist, besonders bevorzugt eine Materialverstärkung von mindestens 0,1 mm und maximal 2 mm aufweist, ganz besonders bevorzugt eine Materialverstärkung von mindestens 0,3 mm und maximal 1 mm aufweist.

5. Verfahren nach einem der vorangehenden Ansprüche, **dadurch gekennzeichnet, dass** die Prothesenbasisvorform (30) zumindest auf einer basalen Seite (38) zur Auflage auf Zahnfleisch vorgeformt ist, wobei die basale Seite (38) der oralen Seite (36) gegenüberliegt, wobei bevorzugt die Prothesenbasisvorform (30) auf der basalen Seite (38) durch eine U-förmige Vertiefung zur Aufnahme eines zahnlosen Kieferbogens vorgeformt ist oder wird und/oder entsprechend der Mundraumsituation eines Patienten anatomisch passend vorgeformt ist oder wird, und/oder
in Schritt D) die Prothesenbasisvorform (30) gegen den Fräskörper (20) bis zu einem Anschlag gedrückt wird, wobei der Anschlag den Abstand im Zwischenraum (39) zwischen der Prothesenbasisvorform (30) außer an der Gegenhalterungsstruktur (28) zu der bearbeiteten Oberfläche (22) des Fräskörpers (20) bestimmt, wobei bevorzugt die Halterungsstruktur (34) der Prothesenbasisvorform (30) und die Gegenhalterungsstruktur (28) des Fräskörpers (20) den Anschlag bilden.

6. Verfahren nach einem der vorangehenden Ansprüche, **dadurch gekennzeichnet, dass** die Halterungsstruktur (34) der Prothesenbasisvorform (30) und die Gegenhalterungsstruktur (28) paarweise durch vorstehende Stifte und zu den vorstehenden Stiften passende Ausnehmungen realisiert werden, wobei bevorzugt die vorstehenden Stifte in Schritt D) flächenbündig in die passenden Ausnehmungen eingesteckt werden, und/oder
die Halterungsstruktur (34) der Prothesenbasisvorform (30) und die Gegenhaltungsstruktur an dem Fräskörper (20) innerhalb der herzustellenden Dentalprothese (50) angeordnet sind, bevorzugt innerhalb einer Verbindung zwischen den Prothesenzähnen (54) und der Prothesenbasis (52) angeordnet sind.

7. Verfahren nach einem der vorangehenden Ansprüche, **dadurch gekennzeichnet, dass** in Schritt D) eine definierte Beabstandung der Prothesenbasisvorform (30) von der bearbeiteten Oberfläche (22) des Fräskörpers (20) erzeugt wird, und/oder
in Schritt D) eine Beabstandung der Prothesenbasisvorform (30) von der bearbeiteten Oberfläche (22) des Fräskörpers (20) von mindestens 0,02 mm und maximal 2 mm erzeugt wird, bevorzugt von mindestens 0,02 mm und maximal 1 mm erzeugt wird, besonders bevorzugt von mindestens 0,1 mm und maximal 1 mm erzeugt wird, ganz besonders bevorzugt von mindestens 0,3 mm und maximal 1 mm erzeugt wird, und/oder
in Schritt D) die Prothesenbasisvorform (30) von der Verbindungsoberfläche (26) des Fräskörpers (20) beabstandet befestigt wird, bevorzugt mit einem Abstand von zumindest 0,02 mm von der Verbindungsoberfläche (26) des Fräskörpers (20) beabstandet befestigt wird, besonders bevorzugt mit einem Abstand von zumindest 0,02 mm und maximal 2 mm von der Verbindungsoberfläche (26) des Fräskörpers (20) beabstandet befestigt wird, ganz besonders bevorzugt mit einem Abstand von zumindest 0,05 mm und maximal 1 mm von der Verbindungsoberfläche (26) des Fräskörpers (20) beabstandet befestigt wird.

8. Verfahren nach einem der vorangehenden Ansprüche, **dadurch gekennzeichnet, dass** in Schritt E1) der zumindest eine fluide polymerisierbare Kunststoff (40) oder Klebstoff zumindest mit einem derartigen Füllstand in den Zwischenraum (39) gefüllt wird, dass die Verbindungsoberfläche (26) der Prothesenzähne (54) und eine orale Oberfläche (32) der Prothesenbasisvorform (30), die vollständig innerhalb dem virtuellen Modell der Prothesenbasis (1) liegt, vollständig mit dem fluiden polymerisierbaren Kunststoff (40) benetzt ist.

9. Verfahren nach einem der vorangehenden Ansprüche, **dadurch gekennzeichnet, dass** in Schritt G) die Dentalprothese (50) durch subtraktives Bearbeiten der Prothesenbasisvorform (30) und des Materials des Fräskörpers (20) aus der Prothesenbasisvorform (30), dem ausgehärteten oder teilweise polymerisierten Kunststoffmaterial und dem Material des Fräskörpers (20) herausgearbeitet wird, oder in Schritt G) die Dentalprothese (50) durch subtraktives Bearbeiten der Prothesenbasisvorform (30), des ausgehärteten oder teilweise polymerisierten Kunststoffmaterials und des Materials des Fräskörpers (20) aus der Prothesenbasisvorform (30), dem ausgehärteten oder teilweise polymerisierten Kunststoffmaterial und dem Material des Fräskörpers (20) herausgearbeitet wird.

10. Verfahren nach einem der vorangehenden Ansprüche, **dadurch gekennzeichnet, dass** in Schritt E1) das Einfüllen des zumindest einen fluiden polymerisierbaren Kunststoffs (40) oder Klebstoffs in den Zwischenraum (39) zwischen dem Fräskörper (20) und der Prothesenbasisvorform (30) und in das in Schritt B) abgetragenen Volumen in der Oberfläche (22) des Fräskörpers (20) derart erfolgt, dass der zumindest eine fluide polymerisierbare Kunststoff (40) oder Klebstoff den bearbeiteten Fräskörper (20) mit der Prothesenbasisvorform (30) verbindet, wobei bevorzugt der zumindest eine fluiden polymerisierbaren Kunststoff (40) oder Klebstoff die in Schritt B) bearbeitete Oberfläche (22) des Fräskörpers (20) und eine Befestigungsfläche auf der oralen Seite der Prothesenbasisvorform (30) vollständig benetzt und/oder der Zwischenraum (39) vollständig, insbesondere ohne Gaseinschlüsse, mit dem zumindest einen fluiden polymerisierbaren Kunststoff (40) oder Klebstoff ausgefüllt wird, oder
in Schritt E2) das Auftragen des zumindest einen fluiden polymerisierbaren Kunststoffs (40) oder Klebstoffs auf die orale Oberfläche (32) der Prothesenbasisvorform (30) und/oder auf die in Schritt B) hergestellte Verbindungsoberfläche (26) des Fräskörpers (20) und in Schritt D) das Befestigen der Prothesenbasisvorform (30) an dem bearbeiteten Fräskörper (20) derart erfolgt, dass der zumindest eine fluide polymerisierbare Kunststoff (40) oder Klebstoff den bearbeiteten Fräskörper (20) mit der Prothesenbasisvorform (30) verbindet, wobei bevorzugt der zumindest eine fluiden polymerisierbaren Kunststoff (40) oder Klebstoff die in Schritt B) bearbeitete Oberfläche (22) des Fräskörpers (20) und eine Befestigungsfläche auf der oralen Seite (36) der Prothesenbasisvorform (30) vollständig benetzt und/oder der Zwischenraum (39) vollständig, insbesondere ohne Gaseinschlüsse, mit dem zumindest einen fluiden polymerisierbaren Kunststoff (40) oder Klebstoff ausgefüllt wird,
wobei in beiden Fällen bevorzugt vorgesehen sein kann, dass der zumindest eine fluide polymerisierbare Kunststoff (40) oder Klebstoff beim Einfüllen in Schritt E1) oder beim Auftragen in Schritt E2) die in Schritt B) bearbeiteten Oberflächen des Fräskörpers (20) vollständig benetzt und/oder die orale Oberfläche (32) der Prothesenbasisvorform (30) zumindest bereichsweise benetzt, wobei bevorzugt der Fräskörper (20) an der für die Bearbeitung mit dem subtraktiven CAM-Verfahren vorgesehenen Oberfläche und/oder die Prothesenbasisvorform (30) an der nicht mit dem fluiden polymerisierbaren Kunststoff (40) oder Klebstoff zu benetzenden Oberfläche eine Beschichtung aufweist, die eine Benetzung mit dem zumindest beinen fluiden polymerisierbaren Kunststoff (40) oder Klebstoff verhindert.

11. Verfahren nach einem der vorangehenden Ansprüche, **dadurch gekennzeichnet, dass** in Schritt B) angrenzend an die Verbindungsoberfläche (26) zwischen den Prothesenzähnen (54) und der Prothesenbasis (52) eine Vertiefung in der Oberfläche (22) des Fräskörpers (20) mit Hilfe des subtraktiven CAM-Verfahrens erzeugt wird, vorzugsweise nach Maßgabe des virtuellen dreidimensionalen Modells der Oberfläche der Dentalprothese (50), wobei bevorzugt die Vertiefung als eine vollständig um die Verbindungsoberfläche (26) umlaufende Vertiefung erzeugt wird, besonders bevorzugt eine zumindest 0,5 mm breite und maximal 10 mm breite vollständig um die Verbindungsoberfläche (26) umlaufende Vertiefung erzeugt wird, und/oder
die orale Seite (36) der Prothesenbasisvorform (30) nach Maßgabe des virtuellen dreidimensionalen Modells der Form der Verbindungsoberfläche (16) der Prothesenzähne (4) zu der Prothesenbasis (1) in der Dentalprothese (50) hergestellt wird, insbesondere mit einem CAM-Verfahren oder einem additiven CAM-Verfahren, wobei bevorzugt bei der Berechnung der Oberfläche der oralen Seite (36) der Prothesenbasisvorform (30) Volumen von der virtuellen dreidimensionalen äußeren Form der Prothesenbasis (1) entfernt wird, besonders bevorzugt mit einer Stärke zwischen 0,3 mm und 2 mm entfernt wird, ganz besonders bevorzugt mit einer Stärke zwischen 0,5 mm und 1 mm entfernt wird.

12. Verfahren nach einem der vorangehenden Ansprüche, **dadurch gekennzeichnet, dass** in Schritt G) das subtraktive Bearbeiten des ausgehärteten oder teilweise polymerisierten Kunststoffmaterials, der Prothesenbasisvorform (30) und des Fräskörpers (20) aus Richtung der Unterseite des Fräskörpers (20), die der in Schritt B) bearbeiteten Oberfläche (22) des Fräskörpers (20) gegenüberliegt, mit dem CAM-Verfahren nach Maßgabe der okklusalen Oberfläche und der oralen Oberfläche des virtuellen Modells der Dentalprothese (50) erfolgt und/oder
in Schritt G) ein subtraktives Bearbeiten des ausgehärteten oder teilweise polymerisierten Kunststoffmaterials, der Prothesenbasisvorform (30) und des Fräskörpers (20) aus Richtung der in Schritt B) bearbeiteten Oberfläche (22) des Fräskörpers (20) mit dem CAM-Verfahren nach Maßgabe basalen Oberfläche des virtuellen Modells der Dentalprothese (50) erfolgt.

13. Verfahren nach einem der vorangehenden Ansprüche, **dadurch gekennzeichnet, dass** die Halterungsstruktur (34) der Prothesenbasisvorform (30) und die Gegenhalterungsstruktur (28) drei definierte Kontaktpunkte bilden, so dass beim Befestigen der Prothesenbasisvorform (30) mit der Halterungsstruktur (34) an der Gegenhalterungsstruktur (28) des Fräskörpers (20) in Schritt D) die Prothesenbasisvorform (30) über die drei definierten Kontaktpunkten der Halterungsstruktur (34) an der Gegenhalterungsstruktur (28) des Fräskörpers (20) befestigt ist, und/oder
auf der zur Bearbeitung mit dem subtraktiven CAM-Verfahren vorgesehenen Oberfläche (22) des Fräskörpers (20) ein Hohlraum zur Aufnahme des fluiden polymerisierbaren Kunststoffs (40) oder Klebstoffs angeordnet ist, wobei der Hohlraum einen Boden aufweist und der Hohlraum ausgehend vom Rand des Bodens seitlich durch eine umlaufende Wandung (23) begrenzt ist, wobei die umlaufende Wandung (23) ringförmig ist und wobei das für Prothesenzähne (54) geeignete Material den Boden bildet und sich bis zu einer Unterseite des Fräskörpers (20) erstreckt, die der Oberseite des Fräskörpers (20) gegenüberliegend angeordnet ist.

14. Dentalprothese (50) hergestellt mit einem Verfahren nach einem der vorangehenden Ansprüche, **dadurch gekennzeichnet, dass**
die Prothesenbasis (52) einen zweiteiligen Aufbau aufweist, bei dem eine subtraktiv bearbeitete Prothesenbasisvorform (30) mit einem ausgehärteten oder teilweise polymerisierten Kunststoffmaterial aus zumindest einem fluiden polymerisierbaren Kunststoff (40) oder Klebstoff mit den subtraktiv bearbeiteten Prothesenzähnen (54) verbunden ist, wobei besonders bevorzugt die Oberfläche des ausgehärteten oder teilweise polymerisierten Kunststoffmaterials ebenfalls subtraktiv bearbeitet ist.

15. Vorrichtung zur Umsetzung eines Verfahrens nach einem der Ansprüche 1 bis 13, die Vorrichtung aufweisend
ein Verbindungsoberflächen-Berechnungsmodul zur Berechnung einer Verbindungsoberfläche (26) zwischen Prothesenzähnen (54) und Prothesenbasis (52) nach Maßgabe eines virtuellen dreidimensionalen Modells einer Form der Verbindungsoberfläche (16) der Prothesenzähne (4) zu der Prothesenbasis (1) in der Dentalprothese (50);
ein Prothesenbasisvorform-Berechnungsmodul zur Berechnung eines virtuellen Modells der Oberfläche einer Prothesenbasisvorform (30) nach Maßgabe eines virtuellen dreidimensionalen Modells einer Form der Verbindungsoberfläche (16) der Prothesenzähne (4) zu der Prothesenbasis (1) und einer basalen Seite der Prothesenbasis (1) der Dentalprothese (50);
ein Verbindungsoberflächen-Steuerungsmodul für eine CAM-Vorrichtung programmiert zur Steuerung der subtraktiven Herstellung der mit dem Verbindungsoberflächen-Berechnungsmodul berechneten Verbindungsoberfläche (26) in einem Fräskörper (20); und
ein Dentalprothesen-Steuerungsmodul für eine CAM-Vorrichtung programmiert zur Steuerung der subtraktiven Herstellung der Oberfläche der herzustellenden Dentalprothese (50) nach Maßgabe des virtuellen Modells einer äußeren Oberfläche der Dentalprothese (50).

16. Vorrichtung nach Anspruch 15, **dadurch gekennzeichnet, dass**
die Vorrichtung ein Gegenhalterungsstruktur-Berechnungsmodul aufweist, das die Berechnung und Positionierung einer Gegenhalterungsstruktur (28) in der Oberfläche (22) des Fräskörpers (20) relativ zu der Verbindungsoberfläche (26) und bevorzugt innerhalb der Verbindungsoberfläche (26) durchführt, wobei die Gegenhalterungsstruktur (28) ein zu einer Halterungsstruktur (34) einer Prothesenbasisvorform (30) passendes Gegenstück bildet, wobei vorzugsweise das Verbindungsoberflächen-Steuerungsmodul für eine CAM-Vorrichtung programmiert ist zur Steuerung der subtraktiven Herstellung der mit dem Verbindungsoberflächen-Berechnungsmodul und dem Gegenhalterungsstruktur-Berechnungsmodul berechneten Verbindungsoberfläche (26) mit der Gegenhalterungsstruktur (28) in dem Fräskörper (20).

## Claims

1. A method for producing a dental prosthesis (50), wherein the dental prosthesis (50) has a plurality of prosthetic teeth (54) and a prosthesis base (52), wherein the prosthesis base (52) includes a gum-colored plastic and wherein the prosthetic teeth (54) and the prosthesis base (52) are firmly connected together in the method, wherein the method is **characterized by** the following steps:
A) provision of a milling body (20) for producing the prosthetic teeth (54) from a material suitable for prosthetic teeth (54) and provision of a prosthesis base preform (30), wherein the prosthesis base preform (30) has a holding structure (34) on an oral side (36) of the prosthesis base preform (30);
B) production of a connecting surface (26) between the prosthetic teeth (54) and the prosthesis base (52) in a surface (22) of the milling body (20) with the assistance of a subtractive CAM method in accordance with a virtual three-dimensional model of the connecting surface (16) of the prosthetic teeth (4) to the prosthesis base (1) in the dental prosthesis (50), wherein the surface (22) of the milling body (20) is a planar surface;
C) production of a mating holding structure (28) in the surface (22) of the milling body (20), wherein the mating holding structure (28) forms a counterpart which fits with the holding structure (34) of the prosthesis base preform (30), or the milling body (20) has the mating holding structure (28) which fits with the holding structure (34) of the prosthesis base preform (30);
D) after steps A), B), and C), attachment of the prosthesis base preform (30) with the holding structure (34) to the mating holding structure (28) of the milling body (20), wherein, apart from at the mating holding structure (28), the prosthesis base preform (30) is attached spaced apart from the machined surface (22) of the milling body (20) such that an interspace (39) open to the outside is obtained between the prosthesis base preform (30) and the milling body (20);
E1) after step D), introduction of at least one fluid polymerizable plastic (40) or adhesive into the interspace (39) between the milling body (20) and the prosthesis base preform (30) and into the volume in the surface (22) of the milling body (20) machined away in step B); and/or
E2) before step D), application of at least one fluid polymerizable plastic (40) or adhesive onto an oral surface (32) of the prosthesis base preform (30) and/or onto the connecting surface (26) produced in step B) of the milling body (20);
F) after step E1) or after step E2) or after step D), curing or partial curing of the at least one fluid polymerizable plastic (40) or adhesive, wherein, on curing, a cured plastics material is obtained in the interspace (39) or, on partial curing, a partially polymerized plastics material is obtained in the interspace (39), wherein the cured plastics material or the partially polymerized plastics material connects the prosthesis base preform (30) firmly and flush to the material of the milling body (20); and
G) after step F), subtractive machining of the cured or partially polymerized plastics material, the prosthesis base preform (30) and the milling body (20) by a CAM method in accordance with a virtual model of an outer surface of the dental prosthesis (50), such that the dental prosthesis (50) is subtractively carved out from the prosthesis base preform (30), the cured or partially polymerized plastics material and the material of the milling body (20).

2. The method according to Claim 1, **characterized in that**
after step F) or after step G), a step H) proceeds in which the partially polymerized plastics material is finally cured, in particular is finally cured by photopolymerization, wherein, subsequent to step G) and H), polishing of the surface of the dental prosthesis (50) and/or surface finishing of the dental prosthesis (50) is carried out, and/or
photopolymerization is carried out on curing or partial curing in step F), wherein final curing by photopolymerization preferably proceeds after step G), and/or
the cured plastics material or the partially polymerized plastics material once completely cured has material properties and/or a color which deviate from the gum-colored plastic of the prosthesis base preform (30), wherein the cured plastics material or the partially polymerized plastics material once completely cured preferably has a hardness and/or transparency which deviate from the gum-colored plastic of the prosthesis base preform (30).

3. The method according to any one of the preceding claims, **characterized in that**
the milling body (20) has a surrounding wall, wherein the surrounding wall of the milling body (20) is retained in steps B) to F), wherein in step E1) the surrounding wall preferably comes into contact with the at least one fluid polymerizable plastic (40) or adhesive, particularly preferably the at least one fluid polymerizable plastic (40) or adhesive is introduced into the interspace (39) such that the level rises up to the surrounding wall, but below the surrounding wall, and/or
the prosthesis base preform (30) is fixed to the milling body (20) in step D), preferably is adhesively bonded to the milling body (20) with the holding structure (34) on the mating holding structure (28), wherein particular preferably
the prosthesis base preform (30) consists at least in part or completely of a gum-colored plastic.

4. The method according to any one of the preceding claims, **characterized in that**
the prosthesis base preform (30) is produced before step A) by a CAM method, in particular by an additive CAM method, on the basis of the virtual three-dimensional model of a surface of a basal side of the prosthesis base (52) of the dental prosthesis (50), wherein the basal side of the prosthesis base preform (30) is preferably produced with an offset in the form of a basal material thickening, wherein particular preferably a material thickening is provided in the production of the prosthesis base preform (30), wherein the material thickening has a thickness of at least 0.1 **mm** in comparison with the surface of the virtual three-dimensional model of the dental prosthesis (50) in the region of the basal side of the prosthesis base (52), particularly preferably a material thickening of at least 0.1 mm and at most 2 mm, and very particularly preferably a material thickening of at least 0.3 mm and at most 1 mm.

5. The method according to any one of the preceding claims, **characterized in that**
the prosthesis base preform (30) is preformed at least on a basal side (38) to lie against gums, wherein the basal side (38) is opposite the oral side (36), wherein the prosthesis base preform (30) preferably is or has been preformed on the basal side (38) with a U-shaped indentation for receiving a toothless mandibular arch and/or is or has been preformed to fit anatomically with the situation in a patient's oral cavity, and/or
in step D), the prosthesis base preform (30) is pressed against the milling body (20) until a limit stop is reached, wherein, apart from at the mating holding structure (28), the limit stop determines the spacing in the interspace (39) between the prosthesis base preform (30) and the machined surface (22) of the milling body (20), wherein the holding structure (34) of the prosthesis base preform (30) and the mating holding structure (28) of the milling body (20) preferably form the limit stop.

6. The method according to any one of the preceding claims, **characterized in that**
the holding structure (34) of the prosthesis base preform (30) and the mating holding structure (28) are implemented in pairs by projecting posts and recesses which fit with the projecting posts, wherein in step D) the projecting posts are preferably inserted flush into the recesses fitting therewith, and/or
the holding structure (34) of the prosthesis base preform (30) and the mating holding structure are arranged on the milling body (20) within dental prosthesis (50) to be produced, preferably are arranged within a connection between the prosthetic teeth (54) and the prosthesis base (52).

7. The method according to any one of the preceding claims, **characterized in that**
a defined spacing of the prosthesis base preform (30) from the machined surface (22) of the milling body (20) is produced in step D), and/or
a spacing of the prosthesis base preform (30) from the machined surface (22) of the milling body (20) of at least 0.02 **mm** and at most 2 mm, preferably of at least 0.02 **mm** and at most 1 mm, particularly preferably of at least 0.1 **mm** and at most 1 mm, and very particularly preferably of at least 0.3 **mm** and at most 1 **mm** is produced in step D), and/or
the prosthesis base preform (30) is attached spaced apart from the connecting surface (26) of the milling body (20) in step D), preferably with a spacing of at least 0.02 mm from the connecting surface (26) of the milling body (20), particularly preferably with a spacing of at least 0.02 mm and at most 2 mm from the connecting surface (26) of the milling body (20), and very particularly preferably with a spacing of at least 0.05 mm and at most 1 mm from the connecting surface (26) of the milling body (20).

8. The method according to any one of the preceding claims, **characterized in that**
the at least one fluid polymerizable plastic (40) or adhesive is filled in step E1) at least to such a filling level in the interspace (39) that the connecting surface (26) of the prosthetic teeth (54) and an oral surface (32) of the prosthesis base preform (30), which is completely located within the virtual model of the prosthesis base (1), is completely wetted with the fluid polymerizable plastic (40).

9. The method according to any one of the preceding claims, **characterized in that**
the dental prosthesis (50) is carved in step G) by subtractive machining of the prosthesis base preform (30) and the material of the milling body (20) from the prosthesis base preform (30), the cured or partially polymerized plastics material and the material of the milling body (20) or
the dental prosthesis (50) is carved in step G) by subtractive machining of the prosthesis base preform (30), the cured or partially polymerized plastics material and the material of the milling body (20) from the prosthesis base preform (30), the cured or partially polymerized plastics material and the material of the milling body (20).

10. The method according to any one of the preceding claims, **characterized in that**
the introduction in step E1) of the at least one fluid polymerizable plastic (40) or adhesive into the interspace (39) between the milling body (20) and the prosthesis base preform (30) and into the volume in the surface (22) of the milling body (20) machined away in step B) proceeds such that the at least one fluid polymerizable plastic (40) or adhesive connects the machined milling body (20) to the prosthesis base preform (30), wherein preferably the at least one fluid polymerizable plastic (40) or adhesive completely wets the surface (22) of the milling body (20) machined in step B) and an attachment face on the oral side of the prosthesis base preform (30) and/or the interspace (39) is completely filled, in particular without entrapped gas, with the at least one fluid polymerizable plastic (40) or adhesive, or
in step E2) application of the at least one fluid polymerizable plastic (40) or adhesive onto the oral surface (32) of the prosthesis base preform (30) and/or onto the connecting surface (26) of the milling body (20) produced in step B), and in step D) attachment of the prosthesis base preform (30) to the machined milling body (20) proceeds such that the at least one fluid polymerizable plastic (40) or adhesive connects the machined milling body (20) to the prosthesis base preform (30), wherein preferably the at least one fluid polymerizable plastic (40) or adhesive completely wets the surface (22) of the milling body (20) machined in step B) and an attachment face on the oral side (36) of the prosthesis base preform (30) and/or the interspace (39) is completely filled, in particular without entrapped gas, with the at least one fluid polymerizable plastic (40) or adhesive,
wherein in both cases it can preferably be provided, that the at least one fluid polymerizable plastic (40) or adhesive, on introduction in step E1) or on application in step E2), completely wets the surfaces of the milling body (20) machined in step B) and/or wets the oral surface (32) of the prosthesis base preform (30) at least in places, wherein preferably the milling body (20) has, on the surface intended for machining by the subtractive CAM method, and/or the prosthesis base preform (30) has, on the surface which is not to be wetted with the fluid polymerizable plastic (40) or adhesive, a coating which prevents wetting with the at least one fluid polymerizable plastic (40) or adhesive.

11. The method according to any one of the preceding claims, **characterized in that**
an indentation in the surface (22) of the milling body (20) is made in step B) adjacent to the connecting surface (26) between the prosthetic teeth (54) and the prosthesis base (52) with the assistance of the subtractive CAM method, preferably in accordance with the virtual three-dimensional model of the surface of the dental prosthesis (50), wherein the indentation is preferably produced as an indentation completely surrounding the connecting surface (26), particularly preferably as an indentation of a width of at least 0.5 mm and at most 10 mm completely surrounding the connecting surface (26), and/or
the oral side (36) of the prosthesis base preform (30) is produced in accordance with the virtual three-dimensional model of the shape of the connecting surface (16) of the prosthetic teeth (4) to the prosthesis base (1) in the dental prosthesis (50), in particular by a CAM method or an additive CAM method, wherein, on calculation of the surface of the oral side (36) of the prosthesis base preform (30), volume is preferably removed from the virtual three-dimensional outer shape of the prosthesis base (1), particularly preferably with a thickness of between 0.3 mm and 2 mm, and very particularly preferably with a thickness of between 0.5 mm and 1 mm.

12. The method according to any one of the preceding claims, **characterized in that**
subtractive machining of the cured or partially polymerized plastics material, the prosthesis base preform (30) and the milling body (20) proceeds in step G) from the direction of the underside of the milling body (20), which is opposite the surface (22) of the milling body (20) machined in step B), by the CAM method in accordance with the occlusal surface and the oral surface of the virtual model of the dental prosthesis (50) and/or
subtractive machining of the cured or partially polymerized plastics material, the prosthesis base preform (30) and the milling body (20) proceeds in step G) from the direction of the surface (22) of the milling body (20) machined in step B) by the CAM method in accordance with the basal surface of the virtual model of the dental prosthesis (50).

13. The method according to any one of the preceding claims, **characterized in that**
the holding structure (34) of the prosthesis base preform (30) and the mating holding structure (28) form three defined contact points, such that, on attachment of the prosthesis base preform (30) with the holding structure (34) to the mating holding structure (28) of the milling body (20) in step D), the prosthesis base preform (30) is attached to the mating holding structure (28) of the milling body (20) via the three defined contact points of the holding structure (34), and/or
a cavity for receiving the fluid polymerizable plastic (40) or adhesive is arranged on the surface (22) of the milling body (20) intended for machining by the subtractive CAM method, wherein the cavity has a bottom and, starting from the edge of the bottom, is laterally bounded by a surrounding wall (23), wherein the surrounding wall (23) is annular and wherein the material suitable for prosthetic teeth (54) forms the bottom and extends to an underside of the milling body (20) which is arranged opposite the upper side of the milling body (20).

14. A dental prosthesis (50) produced with a method according to any one of the preceding claims, **characterized in that**
the prosthesis base (52) has a two-part structure, in which a subtractively machined prosthesis base preform (30) with a plastics material cured or partially polymerized from at least one fluid polymerizable plastic (40) or adhesive is connected to the subtractively machined prosthetic teeth (54), wherein the surface of the cured or partially polymerized plastics material is preferably likewise subtractively machined.

15. A device for implementing the method according to any one of claims 1 to 13, the device comprising
a connecting surface calculation module for calculating a connecting surface (26) between prosthetic teeth (54) and prosthesis base (52) in accordance with a virtual three-dimensional model of a shape of the connecting surface (16) of the prosthetic teeth (4) to the prosthesis base (1) in the dental prosthesis (50);
a prosthesis base preform calculation module for calculating a virtual model of the surface of a prosthesis base preform (30) in accordance with a virtual three-dimensional model of a shape of the connecting surface (16) of the prosthetic teeth (4) to the prosthesis base (1) and a basal side of the prosthesis base (1) of the dental prosthesis (50);
a connecting surface control module for a CAM device programmed to control the subtractive production of the connecting surface (26), calculated with the connecting surface calculation module, in a milling body (20); and
a dental prosthesis control module for a CAM device programmed to control the subtractive production of the surface of the dental prosthesis (50) to be produced in accordance with the virtual model of an outer surface of the dental prosthesis (50).

16. The device according to Claim 15, **characterized in that**
the device has a mating holding structure calculation module which calculates and positions a mating holding structure (28) in the surface (22) of the milling body (20) relative to the connecting surface (26) and preferably within the connecting surface (26), wherein the mating holding structure (28) forms a counterpart which fits with a holding structure (34) of a prosthesis base preform (30), wherein the connecting surface control module for a CAM device is preferably programmed to control the subtractive production of the connecting surface (26) to the mating holding structure (28) in the milling body (20) calculated with the connecting surface calculation module and the mating holding structure calculation module.

## Revendications

1. Procédé de fabrication d'une prothèse dentaire (50), la prothèse dentaire (50) présentant plusieurs dents prothétiques (54) et une base prothétique (52), la base prothétique (52) présentant une matière plastique de couleur gingivale et les dents prothétiques (54) et la base prothétique (52) étant solidement reliées entre elles lors du procédé, le procédé étant **caractérisé par** les étapes suivantes
A) la fourniture d'un corps de fraisage (20) pour la fabrication des dents prothétiques (54) à partir d'un matériau approprié pour des dents prothétiques (54) et la fourniture d'une préforme de base prothétique (30), la préforme de base prothétique (30) présentant une structure de retenue (34) sur un côté oral (36) de la préforme de base prothétique (30) ;
B) la réalisation d'une surface de liaison (26) entre les dents prothétiques (54) et la base prothétique (52) dans une surface (22) du corps de fraisage (20) à l'aide d'un procédé CAM soustractif selon un modèle tridimensionnel virtuel de la surface de liaison (16) des dents prothétiques (4) à la base prothétique (1) dans la prothèse dentaire (50), la surface (22) du corps de fraisage (20) étant une surface plane ;
C) la réalisation d'une structure de contre-retenue (28) dans la surface (22) du corps de fraisage (20), la structure de contre-retenue (28) formant une contrepartie adaptée à la structure de retenue (34) de la préforme de base prothétique (30), ou le corps de fraisage (20) présente la structure de contre-retenue (28) adaptée à la structure de retenue (34) de la préforme de base prothétique (30) ;
D) après les étapes A), B) et C), la fixation de la préforme de base prothétique (30) avec la structure de retenue (34) à la structure de contre-retenue (28) du corps de fraisage (20), la préforme de base prothétique (30) étant fixée à distance de la surface usinée (22) du corps de fraisage (20), à l'exception de la structure de contre-retenue (28), de sorte qu'un espace intermédiaire (39) ouvert vers l'extérieur est formé entre la préforme de base prothétique (30) et le corps de fraisage (20) ;
E1) après l'étape D), introduction d'au moins un adhésif ou une matière plastique polymérisable fluide (40) dans l'espace intermédiaire (39) entre le corps de fraisage (20) et la préforme de base prothétique (30) et dans le volume enlevé à l'étape B) dans la surface (22) du corps de fraisage (20) ; et/ou
E2) avant l'étape D), l'application d'au moins un adhésif ou une matière plastique polymérisable fluide (40) sur une surface orale (32) de la préforme de base prothétique (30) et/ou sur la surface de liaison (26) réalisée à l'étape B) du corps de fraisage (20) ;
F) après l'étape E1) ou après l'étape E2) ou après l'étape D), le durcissement ou le durcissement partiel dudit/de ladite au moins un adhésif ou une matière plastique polymérisable fluide (40), lors du durcissement un matériau en matière plastique durci étant formé dans l'espace intermédiaire (39) ou lors du durcissement partiel un matériau en matière plastique partiellement polymérisée étant formé dans l'espace intermédiaire (39), le matériau en matière plastique durci ou le matériau en matière plastique partiellement polymérisé reliant solidement et de manière affleurante la préforme de base prothétique (30) au matériau du corps de fraisage (20) ; et
G) après l'étape F), l'usinage soustractif du matériau en matière plastique durci ou partiellement polymérisé, de la préforme de base prothétique (30) et du corps de fraisage (20) au moyen d'un procédé CAM selon un modèle virtuel d'une surface externe de la prothèse dentaire (50), de sorte que la prothèse dentaire (50) est obtenue par usinage soustractif à partir de la préforme de base prothétique (30), du matériau en matière plastique durci ou partiellement polymérisé et du matériau du corps de fraisage (20).

2. Procédé selon la revendication 1, **caractérisé en ce que**
après l'étape F) ou après l'étape G), une étape H) est réalisée, au cours de laquelle le matériau en matière plastique partiellement polymérisé est complètement durci, en particulier complètement durci par photopolymérisation, de préférence un polissage de la surface de la prothèse dentaire (50) et/ou un traitement de finition de surface de la prothèse dentaire (50) étant réalisée à la suite des étapes G) et H), et/ou
lors du durcissement ou du durcissement partiel à l'étape F), une photopolymérisation est réalisée, de préférence une polymérisation finale par photopolymérisation étant réalisée après l'étape G), et/ou
le matériau en matière plastique durci ou le matériau en matière plastique partiellement polymérisé présente, après durcissement complet, des propriétés de matériau et/ou une couleur différentes de celles de la matière plastique de couleur gingivale de la préforme de base prothétique (30), de préférence le matériau en matière plastique durci ou le matériau en matière plastique partiellement polymérisé présentant, après durcissement complet, une dureté et/ou une transparence différentes de celles de la matière plastique de couleur gingivale de la préforme de base prothétique (30).

3. Procédé selon l'une des revendications précédentes, **caractérisé en ce que**
le corps de fraisage (20) présente une paroi périphérique, la paroi périphérique du corps de fraisage (20) étant conservée aux étapes B) à F), de préférence à l'étape E1) la paroi périphérique entrant en contact avec ledit/ladite au moins un adhésif ou une la matière plastique polymérisable fluide (40) ou l'adhésif, plus préférentiellement l'adhésif ou la matière plastique polymérisable fluide (40) ou l'adhésif étant introduit(e) dans l'espace intermédiaire (39) de telle sorte que le niveau monte jusqu'à la paroi périphérique, mais reste en dessous de la paroi périphérique, et/ou
la préforme de base prothétique (30) est fixée au corps de fraisage (20) à l'étape D), de préférence est collée au corps de fraisage (20) avec la structure de retenue (34) sur la structure de contre-retenue (28), de manière particulièrement préférée
la préforme de base prothétique (30) est constituée au moins en partie ou entièrement d'une matière plastique de couleur gingivale.

4. Procédé selon l'une des revendications précédentes, **caractérisé en ce que**
avant l'étape A), la préforme de base prothétique (30) est réalisée sur la base d'un modèle tridimensionnel virtuel d'une surface d'un côté basal de la base prothétique (52) de la prothèse dentaire (50) au moyen d'un procédé CAM, en particulier au moyen d'un procédé CAM additif, de préférence le côté basal de la préforme de base prothétique (30) étant réalisé avec un décalage sous la forme d'un épaississement de matériau basal, de manière particulièrement préférée
lors de la fabrication de la préforme de base prothétique (30), un renforcement de matériau étant prévu, le renforcement de matériau présentant une épaisseur d'au moins 0,1 mm par rapport à la surface du modèle tridimensionnel virtuel de la prothèse dentaire (50) dans la zone du côté basal de la base prothétique (52), de manière particulièrement préférée un renforcement de matériau d'au moins 0,1 mm et d'au plus 2 mm, de manière tout particulièrement préférée un renforcement de matériau d'au moins 0,3 mm et d'au plus 1 mm.

5. Procédé selon l'une des revendications précédentes, **caractérisé en ce que**
la préforme de base prothétique (30) est préformée au moins sur un côté basal (38) destiné à reposer sur la gencive, le côté basal (38) étant opposé au côté oral (36), de préférence la préforme de base prothétique (30) étant, ou devant être, préformée sur le côté basal (38) par une cavité en forme de U destinée à recevoir une arcade édentée et/ou étant, ou devant être, préformée de manière anatomiquement adaptée conformément à la situation buccale d'un patient, et/ou
à l'étape D), la préforme de base prothétique (30) est pressée contre le corps de fraisage (20) jusqu'à une butée, la butée déterminant l'écart dans l'espace intermédiaire (39) entre la préforme de base prothétique (30), à l'exception de la structure de contre-retenue (28), et la surface usinée (22) du corps de fraisage (20), de préférence la structure de retenue (34) de la préforme de base prothétique (30) et la structure de contre-retenue (28) du corps de fraisage (20) formant la butée.

6. Procédé selon l'une des revendications précédentes, **caractérisé en ce que**
la structure de retenue (34) de la préforme de base prothétique (30) et la structure de contre-retenue (28) sont réalisées par paires au moyen de broches saillantes et d'évidements correspondants aux broches saillantes, de préférence les broches saillantes étant, à l'étape D), insérées de manière affleurante dans les évidements correspondants, et/ou
la structure de retenue (34) de la préforme de base prothétique (30) et la structure de contre-retenue sur le corps de fraisage (20) sont disposées à l'intérieur de la prothèse dentaire (50) à fabriquer, de préférence disposées à l'intérieur d'une liaison entre les dents prothétiques (54) et la base prothétique (52).

7. Procédé selon l'une des revendications précédentes, **caractérisé en ce que**
à l'étape D), un espacement défini de la préforme de base prothétique (30) par rapport à la surface usinée (22) du corps de fraisage (20) est généré, et/ou
à l'étape D), un espacement de la préforme de base prothétique (30) par rapport à la surface usinée (22) du corps de fraisage (20) d'au moins 0,02 mm et au plus 2 mm est généré, de préférence d'au moins 0,02 mm et au plus 1 mm, de manière particulièrement préférée d'au moins 0,1 mm et au plus 1 mm, de manière tout particulièrement préférée d'au moins 0,3 mm et au plus 1 mm, et/ou
à l'étape D), la préforme de base prothétique (30) est fixée à distance de la surface de liaison (26) du corps de fraisage (20), de préférence est fixée à une distance d'au moins 0,02 mm de la surface de liaison (26) du corps de fraisage (20), de manière particulièrement préférée est fixée à une distance d'au moins 0,02 mm et d'au plus 2 mm de la surface de liaison (26) du corps de fraisage (20), de manière tout particulièrement préférée est fixée à une distance d'au moins 0,05 mm et d'au plus 1 mm de la surface de liaison (26) du corps de fraisage (20).

8. Procédé selon l'une des revendications précédentes, **caractérisé en ce que**
à l'étape E1), ledit/ladite l'au moins un adhésif ou une matière plastique polymérisable fluide (40) ou l'au moins un adhésif est introduit(e) dans l'espace intermédiaire (39) au moins avec un niveau de remplissage tel que la surface de liaison (26) des dents prothétiques (54) et une surface orale (32) de la préforme de base prothétique (30), qui se situe entièrement à l'intérieur du modèle virtuel de la base prothétique (1), soient entièrement mouillées par la matière plastique polymérisable fluide (40).

9. Procédé selon l'une des revendications précédentes, **caractérisé en ce que**
à l'étape G), la prothèse dentaire (50) est obtenue par usinage soustractif de la préforme de base prothétique (30) et du matériau du corps de fraisage (20) à partir de la préforme de base prothétique (30), du matériau en matière plastique durci ou partiellement polymérisé et du matériau du corps de fraisage (20), ou
à l'étape G), la prothèse dentaire (50) est obtenue par usinage soustractif de la préforme de base prothétique (30), du matériau en matière plastique durci ou partiellement polymérisé et du matériau du corps de fraisage (20) à partir de la préforme de base prothétique (30), du matériau en matière plastique durci ou partiellement polymérisé et du matériau du corps de fraisage (20).

10. Procédé selon l'une des revendications précédentes, **caractérisé en ce que**
à l'étape E1), l'introduction dudit/de ladite au moins un adhésif ou une matière plastique polymérisable fluide (40) dans l'espace intermédiaire (39) entre le corps de fraisage (20) et la préforme de base prothétique (30) et dans le volume enlevé à l'étape B) dans la surface (22) du corps de fraisage (20) est réalisée de telle sorte que ledit/ladite au moins un adhésif ou une matière plastique polymérisable fluide (40) relie le corps de fraisage (20) usiné à la préforme de base prothétique (30), de préférence ledit/ladite au moins un adhésif ou une matière plastique polymérisable fluide (40) mouillant entièrement la surface (22) du corps de fraisage (20) usinée à l'étape B) et une surface de fixation sur le côté oral de la préforme de base prothétique (30) et/ou l'espace intermédiaire (39) étant entièrement rempli, en particulier sans inclusions de gaz, par ledit/ladite au moins un adhésif ou une matière plastique polymérisable fluide (40), ou à l'étape E2), l'application de l'au moins une matière plastique polymérisable fluide (40) ou de l'au moins un adhésif sur la surface orale (32) de la préforme de base prothétique (30) et/ou sur la surface de liaison (26) réalisée à l'étape B) du corps de fraisage (20) et, à l'étape D), la fixation de la préforme de base prothétique (30) au corps de fraisage (20) usiné sont réalisées de telle sorte que l'au moins une matière plastique polymérisable fluide (40) ou l'au moins un adhésif relie le corps de fraisage (20) usiné à la préforme de base prothétique (30), de préférence l'au moins une matière plastique polymérisable fluide (40) ou l'au moins un adhésif mouillant entièrement la surface (22) du corps de fraisage (20) usinée à l'étape B) et une surface de fixation sur le côté oral (36) de la préforme de base prothétique (30) et/ou l'espace intermédiaire (39) étant entièrement rempli, en particulier sans inclusions de gaz, par l'au moins une matière plastique polymérisable fluide (40) ou l'au moins un adhésif.
dans les deux cas, il pouvant de préférence être prévu que ledit/ladite au moins un adhésif ou une matière plastique polymérisable fluide (40), lors de l'introduction à l'étape E1) ou lors de l'application à l'étape E2), mouille entièrement les surfaces du corps de fraisage (20) usinées à l'étape B) et/ou mouille au moins par zones la surface orale (32) de la préforme de base prothétique (30), de préférence le corps de fraisage (20) présentant, sur la surface prévue pour l'usinage par le procédé CAM soustractif, et/ou la préforme de base prothétique (30) présentant, sur la surface qui ne doit pas être mouillée par ledit/ladite au moins un adhésif ou une matière plastique polymérisable fluide (40), un revêtement empêchant un mouillage par ledit/ladite au moins un adhésif ou une matière plastique polymérisable fluide (40).

11. Procédé selon l'une des revendications précédentes, **caractérisé en ce que**
à l'étape B), une cavité est réalisée dans la surface (22) du corps de fraisage (20) de manière adjacente à la surface de liaison (26) entre les dents prothétiques (54) et la base prothétique (52) au moyen du procédé CAM soustractif, de préférence selon le modèle tridimensionnel virtuel de la surface de la prothèse dentaire (50), la cavité étant de préférence réalisée sous la forme d'une cavité s'étendant entièrement autour de la surface de liaison (26), de manière particulièrement préférée une cavité s'étendant entièrement autour de la surface de liaison (26), présentant une largeur d'au moins 0,5 mm et d'au plus 10 mm étant réalisée, et/ou
le côté oral (36) de la préforme de base prothétique (30) est réalisé selon le modèle tridimensionnel virtuel de la forme de la surface de liaison (16) des dents prothétiques (4) à la base prothétique (1) dans la prothèse dentaire (50), en particulier au moyen d'un procédé CAM ou d'un procédé CAM additif, de préférence lors du calcul de la surface du côté oral (36) de la préforme de base prothétique (30), du volume étant retiré de la forme extérieure tridimensionnelle virtuelle de la base prothétique (1), de manière particulièrement préférée étant retiré avec une épaisseur comprise entre 0,3 mm et 2 mm, de manière tout particulièrement préférée étant retiré avec une épaisseur comprise entre 0,5 mm et 1 mm.

12. Procédé selon l'une des revendications précédentes, **caractérisé en ce que**
à l'étape G), l'usinage soustractif du matériau en matière plastique durci ou partiellement polymérisé, de la préforme de base prothétique (30) et du corps de fraisage (20) est réalisé à partir du côté inférieur du corps de fraisage (20), opposé à la surface (22) du corps de fraisage (20) usinée à l'étape B), au moyen du procédé CAM selon la surface occlusale et la surface orale du modèle virtuel de la prothèse dentaire (50), et/ou
à l'étape G), un usinage soustractif du matériau en matière plastique durci ou partiellement polymérisé, de la préforme de base prothétique (30) et du corps de fraisage (20) est réalisé à partir de la surface (22) du corps de fraisage (20) usinée à l'étape B), au moyen du procédé CAM selon la surface basale du modèle virtuel de la prothèse dentaire (50).

13. Procédé selon l'une des revendications précédentes, **caractérisé en ce que**
la structure de retenue (34) de la préforme de base prothétique (30) et la structure de contre-retenue (28) forment trois points de contact définis, de sorte que, lors de la fixation de la préforme de base prothétique (30) avec la structure de retenue (34) à la structure de contre-retenue (28) du corps de fraisage (20) à l'étape D), la préforme de base prothétique (30) est fixée par l'intermédiaireau niveau des trois points de contact définis de la structure de retenue (34) à la structure de contre-retenue (28) du corps de fraisage (20), et/ou
sur la surface (22) du corps de fraisage (20) prévue pour l'usinage par le procédé CAM soustractif, une cavité destinée à recevoir l'adhésif ou la matière plastique polymérisable fluide (40) ou l'adhésif est disposée, la cavité présentant un fond et étant limitée latéralement à partir du bord du fond par une paroi périphérique (23), la paroi périphérique (23) étant annulaire et le matériau approprié pour les dents prothétiques (54) formant le fond et s'étendant jusqu'à un côté inférieur du corps de fraisage (20), qui est disposé à l'opposé du côté supérieur du corps de fraisage (20).

14. Prothèse dentaire (50) obtenue par un procédé selon l'une des revendications précédentes, **caractérisée en ce que**
la base prothétique (52) présente une structure en deux parties, dans laquelle une préforme de base prothétique (30) usinée par procédé soustractif est reliée aux dents prothétiques (54) usinées par procédé soustractif au moyen d'un matériau en matière plastique durci ou partiellement polymérisé issu d'au moins un adhésif ou une matière plastique polymérisable fluide (40) ou d'un adhésif, de manière particulièrement préférée la surface du matériau en matière plastique durci ou partiellement polymérisé étant également usinée par procédé soustractif.

15. Dispositif pour la mise en œuvre d'un procédé selon l'une des revendications 1 à 13, le dispositif comprenant
un module de calcul de surface de liaison destiné à calculer une surface de liaison (26) entre des dents prothétiques (54) et une base prothétique (52) selon un modèle tridimensionnel virtuel d'une forme de la surface de liaison (16) des dents prothétiques (4) à la base prothétique (1) dans la prothèse dentaire (50) ;
un module de calcul de préforme de base prothétique destiné à calculer un modèle virtuel de la surface d'une préforme de base prothétique (30) selon un modèle tridimensionnel virtuel d'une forme de la surface de liaison (16) des dents prothétiques (4) à la base prothétique (1) et d'un côté basal de la base prothétique (1) de la prothèse dentaire (50) ;
un module de commande de surface de liaison, programmé pour un dispositif CAM, destiné à commander la réalisation soustractive de la surface de liaison (26) calculée par le module de calcul de surface de liaison dans un corps de fraisage (20) ; et
un module de commande de prothèse dentaire, programmé pour un dispositif CAM, destiné à commander la réalisation soustractive de la surface de la prothèse dentaire (50) à fabriquer selon le modèle virtuel d'une surface externe de la prothèse dentaire (50).

16. Dispositif selon la revendication 15, **caractérisé en ce que**
le dispositif présente un module de calcul de structure de contre-retenue, qui réalise le calcul et le positionnement d'une structure de contre-retenue (28) dans la surface (22) du corps de fraisage (20) par rapport à la surface de liaison (26) et de préférence à l'intérieur de la surface de liaison (26), la structure de contre-retenue (28) formant une contrepartie adaptée à une structure de retenue (34) d'une préforme de base prothétique (30), de préférence le module de commande de surface de liaison étant programmé pour un dispositif CAM afin de commander la réalisation soustractive de la surface de liaison (26) calculée par le module de calcul de surface de liaison et le module de calcul de structure de contre-retenue avec la structure de contre-retenue (28) dans le corps de fraisage (20).
